# EUROPEAN PATENT APPLICATION

(11) **EP 4 734 608 A1**
(43) Date of publication of application: **29.04.2026**
(21) Application number: 24847827.3
(22) Date of filing: 14.06.2024
(51) Int. Cl.: H04W 36/00

(54) **NETWORK SWITCHING METHOD AND APPARATUS**

(30) Priority: 31.07.2023 CN 202310955224
(71) Applicant: Huawei Technologies Co., Ltd., Shenzhen, Guangdong 518129 (CN)
(72) Inventor: ZHANG, Zhiqin, Shenzhen, Guangdong 518129 (CN); FENG, Zhao, Shenzhen, Guangdong 518129 (CN); ZHOU, Runze, Shenzhen, Guangdong 518129 (CN); WANG, Yuan, Shenzhen, Guangdong 518129 (CN)
(74) Representative: Körber, Martin Hans
(86) International application number: PCT/CN2024/099416
(87) International publication number: WO 2025/025864

(57) **Abstract**

A network handover method and an apparatus, related to the field of communication technologies, are provided, to support handover of a terminal device between different visited networks, and ensure service continuity of the terminal device in a handover process, thereby improving communication performance. The method includes: A first session management network element of a first network receives a first request from a first mobility management network element of the first network, where the first request is for requesting to establish a session for a terminal device, the first request includes identifier information of a second session management network element of a second network, and the second network is a home network of the terminal device; and sends, to the second session management network element, a second request for requesting to obtain context information of the terminal device, receives a second response from the second session management network element, and establishes the session for the terminal device based on the second response. The second response includes the context information that is of the terminal device and that is stored in a third session management network element, and the third session management network element is a network element that establishes a session for the terminal device in a third network.

## Description

This application claims priority to Chinese Patent Application No. 202310955224.7, filed with the China National Intellectual Property Administration on July 31, 2023 and entitled "NETWORK HANDOVER METHOD AND APPARATUS", which is incorporated herein by reference in its entirety.

### TECHNICAL FIELD

This application relates to the field of communication technologies, and in particular, to a network handover method and an apparatus.

### BACKGROUND

In a communication system, core networks and an access network may be deployed according to a network sharing mechanism. To be specific, a shared access network may be allowed to access different core networks, to share access network resources between operators, improve network quality, and reduce network deployment costs.

The shared access network may be directly or indirectly connected to the core networks. For example, the shared access network may be directly connected to a core network 1, or the shared access network may be indirectly connected to a core network 2 through the core network 1.

According to the network sharing mechanism, a terminal device may access a home network (for example, the core network 2) through a visited network (for example, the core network 1) based on the shared access network. In a moving process, when the terminal device needs to be handed over from accessing the home network through a visited network 1 to accessing the home network through a visited network 2, if there is no connection between the visited network 1 and the visited network 2, how to implement the handover of the terminal device from the visited network 1 to the visited network 2 and ensure service continuity of the terminal device in a handover process becomes a technical problem to be urgently resolved.

### SUMMARY

Embodiments of this application provide a network handover method and an apparatus, to support handover of a terminal device between different visited networks, and ensure service continuity of the terminal device in a handover process, thereby improving communication performance.

According to a first aspect, an embodiment of this application provides a network handover method. The method may be performed by a first session management network element of a first network, or may be performed by a chip, a chip system, or a system on chip of the first session management network element. The method includes: receiving a first request from a first mobility management network element of the first network, where the first request is for requesting to establish a session for a terminal device, the first request includes identifier information of a second session management network element of a second network, and the second network is a home network of the terminal device; and sending a second request to the second session management network element, receiving a second response from the second session management network element, and establishing the session for the terminal device based on the second response, where the second request is for requesting to obtain context information of the terminal device, the second response includes the context information that is of the terminal device and that is stored in a third session management network element, and the third session management network element is a network element that establishes a session for the terminal device in a third network.

Based on the first aspect, when the terminal device needs to be handed over from the third network to the first network, the second session management network element of the home network (namely, the second network) of the terminal device may assist the first session management network element in obtaining the context information that is of the terminal device and that is stored in the third session management network element, so that the first session management network element may establish the session for the terminal device based on the context information of the terminal device, to implement handover of the terminal device between different visited networks (that is, implement the handover of the terminal device between the third network and the first network), and ensure service continuity of the terminal device in a handover process, thereby improving communication performance.

In a possible design, the first request further includes one or more of the following: identifier information of the session established by the third network for the terminal device and identifier information of the third session management network element.

In a possible design, the second request includes one or more of the following: the identifier information of the session established by the third network for the terminal device and the identifier information of the third session management network element.

Based on the foregoing two possible designs, the identifier information of the session established by the third network for the terminal device and/or the identifier information of the third session management network element are/is carried in the first request and the second request, so that the second session management network element can determine the corresponding third session management network element based on the identifier information of the session or the identifier information of the third session management network element, and then obtains the context information of the terminal device.

In a possible design, the establishing the session for the terminal device based on the second response includes: obtaining first tunnel information and second tunnel information, sending the first tunnel information to a first user plane network element, and sending a first response to the first mobility management network element. The second response includes the first tunnel information and the second tunnel information, the first response includes the second tunnel information, and the first tunnel information is used to establish a data forwarding tunnel between the first user plane network element of the first network and a second user plane network element of the second network.

In a possible design, the second tunnel information is used to establish an uplink data forwarding tunnel between a source access network device of the third network and a third user plane network element of the third network.

Based on the foregoing two possible designs, the first tunnel information is forwarded, so that the first user plane network element can communicate with the second user plane network element by using the first tunnel information, and the second tunnel information is forwarded, so that the source access network device can communicate with the third user plane network element by using the second tunnel information. Then, the data forwarding tunnel between the source access network device and the third user plane network element and the data forwarding tunnel between the second user plane network element and the first user plane network element are subsequently established, so that the source access network device subsequently sends service data of the terminal device to the first user plane network element via the third user plane network element and the second user plane network element, to ensure service continuity of the terminal device in a handover process.

According to a second aspect, an embodiment of this application provides a network handover method. The method may be performed by a first mobility management network element of a first network, or may be performed by a chip, a chip system, or a system on chip of the first mobility management network element. The method includes: receiving a third request from a second mobility management network element of a second network, where the third request is for requesting to hand over a terminal device from a third network to the first network, and the second network is a home network of the terminal device; obtaining identifier information of a second session management network element of the second network; and sending a first request to a first session management network element of the first network, where the first request is for requesting to establish a session for the terminal device, and the first request includes the identifier information of the second session management network element.

Based on the second aspect, when the terminal device needs to be handed over from the third network to the first network, the second mobility management network element of the home network (namely, the second network) of the terminal device may assist a third mobility management network element of the third network in transferring the network handover request from the terminal device to the first mobility management network element of the first network, so that the first mobility management network element may request the first session management network element to establish the session for the terminal device, to implement the handover of the terminal device between the third network and the first network, and ensure service continuity of the terminal device in a handover process, thereby improving communication performance.

In a possible design, the obtaining the identifier information of the second session management network element of the second network includes: determining the identifier information of the second session management network element based on the third request, where the third request includes the identifier information of the second session management network element; or if the third request includes network slice information, determining the identifier information of the second session management network element based on the network slice information; or randomly determining the identifier information of the second session management network element based on a preset configuration.

Based on this possible design, the first mobility management network element may select, in one or more of the foregoing manners, the second session management network element that can assist the terminal device in performing the network handover, so that the first session management network element obtains, via the second session management network element selected by the first mobility management network element, context information that is of the terminal device and that is stored in a third session management network element, to ensure service continuity of the terminal device in a handover process, thereby improving communication performance.

In a possible design, the third request includes global identifier information of a target access network device, and before the sending the first request to the first session management network element of the first network, the method further includes: determining the first session management network element based on the global identifier information of the target access network device; or the third request includes the network slice information, and before the sending the first request to the first session management network element of the first network, the method further includes: determining the first session management network element based on the network slice information.

Based on this possible design, the first mobility management network element may select the appropriate first session management network element for the terminal device in any one of the foregoing manners, to better provide a network service for the terminal device and improve communication performance.

In a possible design, the third request further includes one or more of the following: identifier information of the session established by the third network for the terminal device and identifier information of a third session management network element of the third network.

In a possible design, the first request further includes one or more of the following: the identifier information of the session established by the third network for the terminal device and the identifier information of the third session management network element of the third network.

Based on the foregoing two possible designs, the identifier information of the session established by the third network for the terminal device and/or the identifier information of the third session management network element are/is carried in the third request and the first request, so that the second session management network element can determine the corresponding third session management network element based on the identifier information of the session or the identifier information of the third session management network element, and then obtains the context information of the terminal device.

In a possible design, a first response from the first session management network element is received, where the first response includes second tunnel information; and a third response is sent to the second mobility management network element, where the third response indicates that the first network allows the terminal device to be handed over from the third network to the first network, and the third response includes identifier information of the first mobility management network element and the second tunnel information.

In a possible design, the second tunnel information is used to establish an uplink data forwarding tunnel between a source access network device of the third network and a third user plane network element of the third network.

Based on the foregoing two possible designs, the second tunnel information is forwarded, so that the source access network device can communicate with the third user plane network element by using the second tunnel information. Then, the data forwarding tunnel between the source access network device and the third user plane network element and the data forwarding tunnel between the second user plane network element and the first user plane network element are subsequently established, so that the source access network device subsequently sends service data of the terminal device to the first user plane network element via the third user plane network element and the second user plane network element, to ensure service continuity of the terminal device in a handover process.

According to a third aspect, an embodiment of this application provides a network handover method. The method may be performed by a second mobility management network element of a second network, or may be performed by a chip, a chip system, or a system on chip of the second mobility management network element. The method includes: receiving a fourth request from a third mobility management network element of a third network, where the fourth request is for requesting to hand over a terminal device from the third network to a first network, and the second network is a home network of the terminal device; obtaining identifier information of a second session management network element of the second network; and sending a third request to a first mobility management network element of the first network, where the third request is for requesting to hand over the terminal device from the third network to the first network, and the third request includes the identifier information of the second session management network element.

Based on the third aspect, when the terminal device needs to be handed over from the third network to the first network, the second mobility management network element of the home network (namely, the second network) of the terminal device may assist a third mobility management network element of the third network in transferring the network handover request from the terminal device to the first mobility management network element of the first network, so that the first network then establishes a session for the terminal device, to implement the handover of the terminal device between the third network and the first network, and ensure service continuity of the terminal device in a handover process, thereby improving communication performance.

In a possible design, the obtaining the identifier information of the second session management network element of the second network includes: determining the identifier information of the second session management network element based on the fourth request, where the fourth request includes the identifier information of the second session management network element; or if the fourth request includes identifier information of a session established by the third network for the terminal device, determining the identifier information of the second session management network element from a prestored association relationship between identifier information of a session and identifier information of a second session management network element based on the identifier information of the session; or sending, to a third session management network element of the third network, identifier information of a session established by the third network for the terminal device, and receiving, from the third session management network element, the identifier information that is of the second session management network element and that corresponds to the session; or sending, to a second unified data management network element of the second network, identifier information of a session established by the third network for the terminal device, and receiving, from the second unified data management network element, the identifier information that is of the second session management network element and that corresponds to the session; or randomly determining the identifier information of the second session management network element based on a preset configuration.

Based on this possible design, the second mobility management network element may select, in any one of the foregoing manners, the second session management network element that can assist the terminal device in performing the network handover, so that the first session management network element subsequently obtains, via the second session management network element selected by the second mobility management network element, context information that is of the terminal device and that is stored in the third session management network element, to ensure service continuity of the terminal device in a handover process, thereby improving communication performance.

In a possible design, the fourth request further includes first identifier information and global identifier information of a target access network device, where the first identifier information is identifier information that is allocated by the third network to the terminal device of the second network and that is used to access the third network, the global identifier information of the target access network device includes second identifier information, and the second identifier information is identifier information that is allocated by the first network to the terminal device of the first network and that is used to access the first network.

In a possible design, the third request is sent to the first mobility management network element when the first identifier information and the second identifier information indicate that the terminal device is handed over from the third network to the first network.

Based on the foregoing two possible designs, the second mobility management network element may determine, based on the first identifier information, that the terminal device is an inter-network roaming subscriber. The second mobility management network element may determine, based on the first identifier information and the second identifier information, that the inter-network roaming terminal device is handed over from the third network to the first network. If supporting the handover of the inter-network roaming terminal device from the third network to the first network, the second mobility management network element may send the third request to the first mobility management network element of the first network.

In a possible design, before the sending the third request to the first mobility management network element of the first network, the method further includes: determining the first mobility management network element based on the second identifier information; or sending a service discovery request to a second topology management network element of the second network, receiving a service discovery response from the second topology management network element, and determining the first mobility management network element based on the service discovery response, where the service discovery request includes the global identifier information of the target access network device, the service discovery request is for requesting to discover a mobility management network element associated with the target access network device, and the service discovery response includes identifier information of the first mobility management network element.

Based on this possible design, the second mobility management network element may select the appropriate first mobility management network element for the terminal device in any one of the foregoing manners, to better provide a network service for the terminal device and improve communication performance.

In a possible design, the third request includes third identifier information, and the third identifier information is identifier information that is allocated by the first network to the terminal device of the second network and that is used to access the first network.

Based on this possible design, when determining to send the third request to the first mobility management network element, the second mobility management network element may determine the third identifier information, and send the third request to the first mobility management network element by using the third identifier information.

In a possible design, the fourth request further includes one or more of the following: network slice information, the global identifier information of the target access network device, and identifier information of the third session management network element of the third network.

In a possible design, the third request further includes one or more of the following: the network slice information, the global identifier information of the target access network device, and the identifier information of the third session management network element of the third network.

Based on the foregoing two possible designs, the network slice information is carried, so that network elements of the second network and the first network can determine, based on the network slice information, network elements (for example, determine the second session management network element, the first session management network element, and the like) participating in a network handover process, to better provide a network service for the terminal device and improve communication performance. The global identifier information of the target access network device is carried, so that each network can determine a network to which the terminal device is to be handed over, and network elements of the second network and the first network can further determine, based on the network slice information, network elements (for example, determine the second session management network element, the first mobility management network element, and the first session management network element) participating in a network handover process, to better provide a network service for the terminal device and improve communication performance. The identifier information of the third session management network element is carried, so that the second session management network element can determine the corresponding third session management network element based on the identifier information of the third session management network element, to obtain the context information of the terminal device.

In a possible design, a third response from the first mobility management network element is received, where the third response indicates that the first network allows the terminal device to be handed over from the third network to the first network, and the third response includes the identifier information of the first mobility management network element and second tunnel information; and a fourth response is sent to the third mobility management network element, where the fourth response indicates that the first network allows the terminal device to be handed over from the third network to the first network, and the fourth response includes the identifier information of the first mobility management network element and the second tunnel information.

In a possible design, the second tunnel information is used to establish an uplink data forwarding tunnel between a source access network device of the third network and a third user plane network element of the third network.

Based on the foregoing two possible designs, the second tunnel information is forwarded, so that the source access network device can communicate with the third user plane network element by using the second tunnel information. Then, the data forwarding tunnel between the source access network device and the third user plane network element and a data forwarding tunnel between a second user plane network element and a first user plane network element are subsequently established, so that the source access network device subsequently sends service data of the terminal device to the first user plane network element via the third user plane network element and the second user plane network element, to ensure service continuity of the terminal device in a handover process.

According to a fourth aspect, an embodiment of this application provides a network handover method. The method may be performed by a second session management network element of a second network, or may be performed by a chip, a chip system, or a system on chip of the second session management network element. The method includes: receiving a second request from a first session management network element of a first network, where the second request is for requesting to obtain context information of a terminal device, and the second network is a home network of the terminal device; sending a fifth request to a third session management network element of a third network, where the third session management network element is a network element that establishes a session for the terminal device in the third network, and the fifth request is for requesting to obtain the context information of the terminal device; receiving a fifth response from the third session management network element, where the fifth response includes the context information that is of the terminal device and that is stored in the third session management network element; and sending a second response to the first session management network element, where the second response includes the context information that is of the terminal device and that is stored in the third session management network element.

Based on the fourth aspect, when the terminal device needs to be handed over from the third network to the first network, the second session management network element of the home network (namely, the second network) of the terminal device may assist the first session management network element in obtaining the context information that is of the terminal device and that is stored in the third session management network element, so that the first session management network element establishes a session for the terminal device based on the context information of the terminal device, to implement handover of the terminal device between different visited networks (that is, implement the handover of the terminal device between the third network and the first network), and ensure service continuity of the terminal device in a handover process, thereby improving communication performance.

In a possible design, the second request includes one or more of the following: identifier information of the session established by the third network for the terminal device and identifier information of the third session management network element.

Based on this possible designs, the identifier information of the session established by the third network for the terminal device and/or the identifier information of the third session management network element are/is carried in the second request, so that the second session management network element can determine the corresponding third session management network element based on the identifier information of the session or the identifier information of the third session management network element, and then obtains the context information of the terminal device.

In a possible design, second tunnel information and third tunnel information are obtained; first tunnel information and fourth tunnel information from a second user plane network element of the second network are received, where the fifth response includes the second tunnel information and the third tunnel information, the first tunnel information is used to establish a data forwarding tunnel between a first user plane network element of the first network and the second user plane network element of the second network, and the third tunnel information and the fourth tunnel information are used to establish a data forwarding tunnel between the second user plane network element and a third user plane network element; the first tunnel information and the second tunnel information are sent to the first session management network element; the third tunnel information is sent to the second user plane network element; and the fourth tunnel information is sent to the third session management network element of the third network.

In a possible design, the second tunnel information is used to establish an uplink data forwarding tunnel between a source access network device of the third network and the third user plane network element of the third network.

Based on the foregoing two possible designs, the first tunnel information is forwarded, so that the first user plane network element can communicate with the second user plane network element by using the first tunnel information, and the second tunnel information is forwarded, so that the source access network device can communicate with the third user plane network element by using the second tunnel information. The third tunnel information and the fourth tunnel information are forwarded, so that the second user plane network element can communicate with the third user plane network element. Then, the data forwarding tunnel between the source access network device and the third user plane network element and the data forwarding tunnel between the second user plane network element and the first user plane network element are subsequently established, so that the source access network device subsequently sends service data of the terminal device to the first user plane network element via the third user plane network element and the second user plane network element, to ensure service continuity of the terminal device in a handover process.

According to a fifth aspect, an embodiment of this application provides a network handover method. The method may be performed by a third mobility management network element of a third network, or may be performed by a chip, a chip system, or a system on chip of the third mobility management network element. The method includes: receiving a handover request from a terminal device, where the handover request includes global identifier information of a target access network device, and the handover request is for requesting to hand over to the target access network device; obtaining identifier information of a second session management network element of a second network based on the handover request, where the second network is a home network of the terminal device; and sending a fourth request to a second mobility management network element of the second network, where the fourth request is for requesting to hand over the terminal device from the third network to a first network, and the fourth request includes the identifier information of the second session management network element.

Based on the fifth aspect, when the terminal device needs to be handed over from the third network to the first network, the second mobility management network element of the home network (namely, the second network) of the terminal device may assist the third mobility management network element of the third network in transferring the handover request from the terminal device to the first network, and the fourth request carries the identifier information of the second session management network element, so that a first session management network element of the first network can request context information of the terminal device from the second session management network element, to establish a session for the terminal device. This implements the handover of the terminal device between the third network and the first network, and ensures service continuity of the terminal device in a handover process, thereby improving communication performance.

In a possible design, the obtaining the identifier information of the second session management network element of the second network includes: determining the identifier information of the second session management network element from a prestored association relationship between identifier information of a session and identifier information of a second session management network element based on identifier information of a session established by the third network for the terminal device; or sending, to a third session management network element of the third network, identifier information of a session established by the third network for the terminal device, and receiving the identifier information of the second session management network element from the third session management network element; or sending, to a unified data management network element, identifier information of a session established by the third network for the terminal device, and receiving the identifier information of the second session management network element from the unified data management network element, where the unified data management network element is a third unified data management network element of the third network, or the unified data management network element is a second unified data management network element of the second network.

Based on this possible design, the third mobility management network element may select, in any one of the foregoing manners, the second session management network element that can assist the terminal device in performing the network handover, so that the first session management network element obtains, via the second session management network element selected by the third mobility management network element, context information that is of the terminal device and that is stored in the third session management network element, to ensure service continuity of the terminal device in a handover process, thereby improving communication performance.

In a possible design, the fourth request further includes first identifier information and global identifier information of a target access network device, where the first identifier information is identifier information that is allocated by the third network to the terminal device of the second network and that is used to access the third network, the global identifier information of the target access network device includes second identifier information, and the second identifier information is identifier information that is allocated by the first network to the terminal device of the first network and that is used to access the first network.

Based on this possible design, the fourth request carries the first identifier information and the global identifier information of the target access network device, so that when determining that the terminal device belonging to inter-network roaming requests to be handed over from the third network to the first network, the second mobility management network element forwards the network handover request from the terminal device to a first mobility management network element of the first network.

In a possible design, a fourth response from the second mobility management network element is received, where the fourth response indicates that the first network allows the terminal device to be handed over from the third network to the first network, the fourth response includes identifier information of a first mobility management network element of the first network and second tunnel information, and the second tunnel information is used to establish an uplink data forwarding tunnel between a source access network device of the third network and a third user plane network element of the third network; and the second tunnel information is sent to the source access network device of the terminal device.

Based on this possible designs, the second tunnel information is forwarded, so that the source access network device can communicate with the third user plane network element by using the second tunnel information. Then, the data forwarding tunnel between the source access network device and the third user plane network element and a data forwarding tunnel between a second user plane network element and a first user plane network element are subsequently established, so that the source access network device subsequently sends service data of the terminal device to the first user plane network element via the third user plane network element and the second user plane network element, to ensure service continuity of the terminal device in a handover process.

According to a sixth aspect, an embodiment of this application provides a network handover method. The method may be performed by a second user plane network element of a second network, or may be performed by a chip, a chip system, or a system on chip of the second user plane network element. The method includes: receiving service data of a terminal device from a third user plane network element of a third network, where a second network is a home network of the terminal device; determining a first user plane network element of a first network based on the service data of the terminal device; and sending the service data of the terminal device to the first user plane network element of the first network.

Based on the sixth aspect, when the terminal device needs to be handed over from the third network to the first network, the second user plane network element of the home network (namely, the second network) of the terminal device may assist the first user plane network element in obtaining the service data that is of the terminal device and that is sent by a source access network device to the third user plane network element, and when the terminal device is handed over between different visited networks (that is, the terminal device is handed over between the third network and the first network), service continuity of the terminal device in a handover process is ensured, thereby improving communication performance.

In a possible design, the receiving the service data of the terminal device from the third user plane network element of the third network includes: sending fourth tunnel information to a second session management network element of the second network, where the fourth tunnel information is used to establish an uplink data forwarding tunnel between the second user plane network element and the third user plane network element; and receiving the service data that is of the terminal device and that is sent by the third user plane network element based on the fourth tunnel information.

In a possible design, the sending the service data of the terminal device to the first user plane network element of the first network includes: receiving fifth tunnel information from the second session management network element of the second network, where the fifth tunnel information is used to establish an uplink data forwarding tunnel between the first user plane network element and the second user plane network element; and sending the service data of the terminal device to the first user plane network element based on the fifth tunnel information.

Based on the foregoing two possible designs, the second user plane network element may forward the service data of the terminal device based on the tunnel information, to ensure service continuity of the terminal device in a handover process, thereby improving communication performance.

According to a seventh aspect, an embodiment of this application provides a communication apparatus. The communication apparatus may be used in the first session management network element of the first network in the first aspect, to implement a function performed by the first session management network element. The communication apparatus may be the first session management network element, or may be a chip, a chip system, a system on chip, or the like of the first session management network element. The communication apparatus may perform, by using hardware, a function performed by the first session management network element, or may be implemented by hardware by executing corresponding software. The hardware or the software includes one or more modules corresponding to the foregoing function, for example, a transceiver module and a processing module. The transceiver module may independently complete the following receiving and sending operations, or may cooperate with the processing module to complete the following receiving and sending operations. Correspondingly, the processing module may also independently complete the following processing operations, or may cooperate with the transceiver module to complete the following processing operations. This is not limited.

The transceiver module is configured to receive a first request from a first mobility management network element of the first network, where the first request is for requesting to establish a session for a terminal device, the first request includes identifier information of a second session management network element of a second network, and the second network is a home network of the terminal device. The transceiver module is further configured to: send a second request to the second session management network element, and receive a second response from the second session management network element. The processing module is configured to establish the session for the terminal device based on the second response. The second request is for requesting to obtain context information of the terminal device, the second response includes the context information that is of the terminal device and that is stored in a third session management network element, and the third session management network element is a network element that establishes a session for the terminal device in a third network.

In a possible design, the first request further includes one or more of the following: identifier information of the session established by the third network for the terminal device and identifier information of the third session management network element.

In a possible design, the second request includes one or more of the following: the identifier information of the session established by the third network for the terminal device and the identifier information of the third session management network element.

In a possible design, the processing module is specifically configured to obtain first tunnel information and second tunnel information. The transceiver module is further configured to: send the first tunnel information to a first user plane network element, and send a first response to the first mobility management network element. The first response includes the first tunnel information and the second tunnel information, the first response includes the second tunnel information, and the first tunnel information is used to establish a data forwarding tunnel between the first user plane network element of the first network and a second user plane network element of the second network.

In a possible design, the second tunnel information is used to establish an uplink data forwarding tunnel between a source access network device of the third network and a third user plane network element of the third network.

For technical effects achieved by any one of the seventh aspect or the possible designs of the seventh aspect, refer to the technical effects achieved by any one of the first aspect or the possible designs of the first aspect. Details are not described again.

According to an eighth aspect, an embodiment of this application provides a communication apparatus. The communication apparatus may be used in the first mobility management network element of the first network in the second aspect, to implement a function performed by the first mobility management network element. The communication apparatus may be the first mobility management network element, or may be a chip, a chip system, a system on chip, or the like of the first mobility management network element. The communication apparatus may perform, by using hardware, a function performed by the first mobility management network element, or may be implemented by hardware by executing corresponding software. The hardware or the software includes one or more modules corresponding to the foregoing function, for example, a transceiver module and a processing module. The transceiver module may independently complete the following receiving and sending operations, or may cooperate with the processing module to complete the following receiving and sending operations. Correspondingly, the processing module may also independently complete the following processing operations, or may cooperate with the transceiver module to complete the following processing operations. This is not limited.

The transceiver module is configured to receive a third request from a second mobility management network element of a second network, where the third request is for requesting to hand over a terminal device from a third network to the first network, and the second network is a home network of the terminal device. The processing module is configured to obtain identifier information of a second session management network element of the second network. The transceiver module is further configured to send a first request to a first session management network element of the first network, where the first request is for requesting to establish a session for the terminal device, and the first request includes the identifier information of the second session management network element.

In a possible design, the processing module is specifically configured to: determine the identifier information of the second session management network element based on the third request, where the third request includes the identifier information of the second session management network element; or if the third request includes network slice information, determine the identifier information of the second session management network element based on the network slice information; or randomly determine the identifier information of the second session management network element based on a preset configuration.

In a possible design, the third request includes global identifier information of a target access network device, and before the transceiver module sends the first request to the first session management network element of the first network, the processing module is further configured to determine the first session management network element based on the global identifier information of the target access network device. Alternatively, the third request includes network slice information, and before the transceiver module sends the first request to the first session management network element of the first network, the processing module is further configured to determine the first session management network element based on the network slice information.

In a possible design, the third request further includes one or more of the following: identifier information of the session established by the third network for the terminal device and identifier information of a third session management network element of the third network.

In a possible design, the first request further includes one or more of the following: the identifier information of the session established by the third network for the terminal device and the identifier information of the third session management network element of the third network.

In a possible design, the transceiver module is further configured to: receive a first response from the first session management network element, and send a third response to the second mobility management network element, where the first response includes second tunnel information; and the third response indicates that the first network allows the terminal device to be handed over from the third network to the first network, and the third response includes identifier information of the first mobility management network element and the second tunnel information.

In a possible design, the second tunnel information is used to establish an uplink data forwarding tunnel between a source access network device of the third network and a third user plane network element of the third network.

For technical effects achieved by any one of the eighth aspect or the possible designs of the eighth aspect, refer to the technical effects achieved by any one of the second aspect or the possible designs of the second aspect. Details are not described again.

According to a ninth aspect, an embodiment of this application provides a communication apparatus. The communication apparatus may be used in the second mobility management network element of the second network in the third aspect, to implement a function performed by the second mobility management network element. The communication apparatus may be the second mobility management network element, or may be a chip, a chip system, a system on chip, or the like of the second mobility management network element. The communication apparatus may perform, by using hardware, a function performed by the second mobility management network element, or may be implemented by hardware by executing corresponding software. The hardware or the software includes one or more modules corresponding to the foregoing function, for example, a transceiver module and a processing module. The transceiver module may independently complete the following receiving and sending operations, or may cooperate with the processing module to complete the following receiving and sending operations. Correspondingly, the processing module may also independently complete the following processing operations, or may cooperate with the transceiver module to complete the following processing operations. This is not limited.

The transceiver module is configured to receive a fourth request from a third mobility management network element of a third network, where the fourth request is for requesting to hand over a terminal device from the third network to a first network, and the second network is a home network of the terminal device. The processing module is configured to obtain identifier information of a second session management network element of the second network. The transceiver module is further configured to send a third request to a first mobility management network element of the first network, where the third request is for requesting to hand over the terminal device from the third network to the first network, and the third request includes the identifier information of the second session management network element.

In a possible design, the processing module is specifically configured to determine the identifier information of the second session management network element based on the fourth request, where the fourth request includes the identifier information of the second session management network element. Alternatively, if the fourth request includes identifier information of a session established by the third network for the terminal device, the processing module is specifically configured to determine the identifier information of the second session management network element from a prestored association relationship between identifier information of a session and identifier information of a second session management network element based on the identifier information of the session. Alternatively, the transceiver module is further configured to: send, to a third session management network element of the third network, identifier information of a session established by the third network for the terminal device, and receive, from the third session management network element, the identifier information that is of the second session management network element and that corresponds to the session. Alternatively, the transceiver module is further configured to: send, to a second unified data management network element of the second network, identifier information of a session established by the third network for the terminal device, and receive, from the second unified data management network element, the identifier information that is of the second session management network element and that corresponds to the session. Alternatively, the processing module is specifically configured to randomly determine the identifier information of the second session management network element based on a preset configuration.

In a possible design, the fourth request further includes first identifier information and global identifier information of a target access network device, where the first identifier information is identifier information that is allocated by the third network to the terminal device of the second network and that is used to access the third network, the global identifier information of the target access network device includes second identifier information, and the second identifier information is identifier information that is allocated by the first network to the terminal device of the first network and that is used to access the first network.

In a possible design, the transceiver module is specifically configured to send the third request to the first mobility management network element when the first identifier information and the second identifier information indicate that the terminal device is handed over from the third network to the first network.

In a possible design, before the transceiver module sends the third request to the first mobility management network element of the first network, the processing module is further configured to determine the first mobility management network element based on the second identifier information. Alternatively, the transceiver module is further configured to: send a service discovery request to a second topology management network element of the second network, and receive a service discovery response from the second topology management network element, and the processing module determines the first mobility management network element based on the service discovery response, where the service discovery request includes the global identifier information of the target access network device, the service discovery request is for requesting to discover a mobility management network element associated with the target access network device, and the service discovery response includes identifier information of the first mobility management network element.

In a possible design, the third request includes third identifier information, and the third identifier information is identifier information that is allocated by the first network to the terminal device of the second network and that is used to access the first network.

In a possible design, the fourth request further includes one or more of the following: network slice information, the global identifier information of the target access network device, and identifier information of the third session management network element of the third network.

In a possible design, the third request further includes one or more of the following: the network slice information, the global identifier information of the target access network device, and the identifier information of the third session management network element of the third network.

In a possible design, the transceiver module is further configured to receive a third response from the first mobility management network element, where the third response indicates that the first network allows the terminal device to be handed over from the third network to the first network, and the third response includes the identifier information of the first mobility management network element and second tunnel information. The transceiver module is further configured to send a fourth response to the third mobility management network element, where the fourth response indicates that the first network allows the terminal device to be handed over from the third network to the first network, and the fourth response includes the identifier information of the first mobility management network element and the second tunnel information.

In a possible design, the second tunnel information is used to establish an uplink data forwarding tunnel between a source access network device of the third network and a third user plane network element of the third network.

For technical effects achieved by any one of the ninth aspect or the possible designs of the ninth aspect, refer to the technical effects achieved by any one of the third aspect or the possible designs of the third aspect. Details are not described again.

According to a tenth aspect, an embodiment of this application provides a communication apparatus. The communication apparatus may be used in the second session management network element of the second network in the fourth aspect, to implement a function performed by the second session management network element. The communication apparatus may be the second session management network element, or may be a chip, a chip system, a system on chip, or the like of the second session management network element. The communication apparatus may perform, by using hardware, a function performed by the second session management network element, or may be implemented by hardware by executing corresponding software. The hardware or the software includes one or more modules corresponding to the foregoing function, for example, a transceiver module and a processing module. The transceiver module may independently complete the following receiving and sending operations, or may cooperate with the processing module to complete the following receiving and sending operations. Correspondingly, the processing module may also independently complete the following processing operations, or may cooperate with the transceiver module to complete the following processing operations. This is not limited.

The transceiver module is configured to receive a second request from a first session management network element of a first network, where the second request is for requesting to obtain context information of a terminal device, and a second network is a home network of the terminal device. The transceiver module is further configured to send a fifth request to a third session management network element of a third network, where the third session management network element is a network element that establishes a session for the terminal device in the third network, and the fifth request is for requesting to obtain context information of the terminal device. The transceiver module is further configured to receive a fifth response from the third session management network element, where the fifth response includes the context information that is of the terminal device and that is stored in the third session management network element. The transceiver module is further configured to send a second response to the first session management network element, where the second response includes the context information that is of the terminal device and that is stored in the third session management network element.

In a possible design, the second request includes one or more of the following: identifier information of the session established by the third network for the terminal device and identifier information of the third session management network element.

In a possible design, the processing module is configured to obtain second tunnel information and third tunnel information. The transceiver module is configured to receive first tunnel information and fourth tunnel information from a second user plane network element of the second network, where the fifth response includes the second tunnel information and the third tunnel information, the first tunnel information is used to establish a data forwarding tunnel between a first user plane network element of the first network and the second user plane network element of the second network, and the third tunnel information and the fourth tunnel information are used to establish a data forwarding tunnel between the second user plane network element and a third user plane network element. The transceiver module is further configured to: send the first tunnel information and the second tunnel information to the first session management network element, send the third tunnel information to the second user plane network element, and send the fourth tunnel information to the third session management network element of the third network.

In a possible design, the second tunnel information is used to establish an uplink data forwarding tunnel between a source access network device of the third network and the third user plane network element of the third network.

For technical effects achieved by any one of the tenth aspect or the possible designs of the tenth aspect, refer to the technical effects achieved by any one of the fourth aspect or the possible designs of the fourth aspect. Details are not described again.

According to an eleventh aspect, an embodiment of this application provides a communication apparatus. The communication apparatus may be used in the third mobility management network element of the third network in the fifth aspect, to implement a function performed by the third mobility management network element. The communication apparatus may be the third mobility management network element, or may be a chip, a chip system, a system on chip, or the like of the third mobility management network element. The communication apparatus may perform, by using hardware, a function performed by the third mobility management network element, or may be implemented by hardware by executing corresponding software. The hardware or the software includes one or more modules corresponding to the foregoing function, for example, a transceiver module and a processing module. The transceiver module may independently complete the following receiving and sending operations, or may cooperate with the processing module to complete the following receiving and sending operations. Correspondingly, the processing module may also independently complete the following processing operations, or may cooperate with the transceiver module to complete the following processing operations. This is not limited.

The transceiver module is configured to receive a handover request from a terminal device, where the handover request includes global identifier information of a target access network device, and the handover request is for requesting to hand over to the target access network device. The processing module is configured to obtain identifier information of a second session management network element of a second network based on the handover request, where the second network is a home network of the terminal device. The transceiver module is further configured to send a fourth request to a second mobility management network element of the second network, where the fourth request is for requesting to hand over the terminal device from a third network to a first network, and the fourth request includes the identifier information of the second session management network element.

In a possible design, the processing module is specifically configured to: determine the identifier information of the second session management network element from a prestored association relationship between identifier information of a session and identifier information of a second session management network element based on identifier information of a session established by the third network for the terminal device. Alternatively, the transceiver module is further configured to: send, to a third session management network element of the third network, identifier information of a session established by the third network for the terminal device, and receive the identifier information of the second session management network element from the third session management network element. Alternatively, the transceiver module is further configured to: send, to a unified data management network element, identifier information of a session established by the third network for the terminal device, and receive the identifier information of the second session management network element from the unified data management network element, where the unified data management network element is a third unified data management network element of the third network, or the unified data management network element is a second unified data management network element of the second network.

In a possible design, the fourth request further includes first identifier information and global identifier information of a target access network device, where the first identifier information is identifier information that is allocated by the third network to the terminal device of the second network and that is used to access the third network, the global identifier information of the target access network device includes second identifier information, and the second identifier information is identifier information that is allocated by the first network to the terminal device of the first network and that is used to access the first network.

In a possible design, the transceiver module is further configured to receive a fourth response from the second mobility management network element, where the fourth response indicates that the first network allows the terminal device to be handed over from the third network to the first network, the fourth response includes identifier information of a first mobility management network element of the first network and second tunnel information, and the second tunnel information is used to establish an uplink data forwarding tunnel between a source access network device of the third network and a third user plane network element of the third network. The transceiver module is further configured to send the second tunnel information to the source access network device of the terminal device.

For technical effects achieved by any one of the eleventh aspect or the possible designs of the eleventh aspect, refer to the technical effects achieved by any one of the fifth aspect or the possible designs of the fifth aspect. Details are not described again.

According to a twelfth aspect, an embodiment of this application provides a communication apparatus. The communication apparatus may be used in the second user plane network element of the second network in the sixth aspect, to implement a function performed by the second user plane network element. The communication apparatus may be the second user plane network element, or may be a chip, a chip system, a system on chip, or the like of the second user plane network element. The communication apparatus may perform, by using hardware, a function performed by the second user plane network element, or may be implemented by hardware executing corresponding software. The hardware or the software includes one or more modules corresponding to the foregoing function, for example, a transceiver module and a processing module. The transceiver module may independently complete the following receiving and sending operations, or may cooperate with the processing module to complete the following receiving and sending operations. Correspondingly, the processing module may also independently complete the following processing operations, or may cooperate with the transceiver module to complete the following processing operations. This is not limited.

The transceiver module is configured to receive service data of a terminal device from a third user plane network element of a third network, where a second network is a home network of the terminal device. The processing module is configured to determine a first user plane network element of a first network based on the service data of the terminal device. The transceiver module is further configured to send the service data of the terminal device to the first user plane network element of the first network.

In a possible design, the transceiver module is further configured to send fourth tunnel information to a second session management network element of the second network, where the fourth tunnel information is used to establish an uplink data forwarding tunnel between the second user plane network element and the third user plane network element. The transceiver module is further configured to receive the service data that is of the terminal device and that is sent by the third user plane network element based on the fourth tunnel information.

In a possible design, the transceiver module is further configured to receive fifth tunnel information from the second session management network element of the second network, where the fifth tunnel information is used to establish an uplink data forwarding tunnel between the first user plane network element and the second user plane network element. The transceiver module is further configured to send the service data of the terminal device to the first user plane network element based on the fifth tunnel information.

For technical effects achieved by any one of the twelfth aspect or the possible designs of the twelfth aspect, refer to the technical effects achieved by any one of the sixth aspect or the possible designs of the sixth aspect. Details are not described again.

According to a thirteenth aspect, an embodiment of this application provides a communication apparatus. The communication apparatus includes one or more processors. The one or more processors are configured to run a computer program or instructions. When the one or more processors execute the computer instructions or the instructions, the communication apparatus is caused to perform the network handover method according to any one of the first aspect or the possible designs of the first aspect, the network handover method according to any one of the second aspect or the possible designs of the second aspect, the network handover method according to any one of the third aspect or the possible designs of the third aspect, the network handover method according to any one of the fourth aspect or the possible designs of the fourth aspect, the network handover method according to any one of the fifth aspect or the possible designs of the fifth aspect, or the network handover method according to any one of the sixth aspect or the possible designs of the sixth aspect.

In a possible design, the communication apparatus further includes one or more memories, the one or more memories are coupled to the one or more processors, and the one or more memories are configured to store the foregoing computer program or instructions. In a possible implementation, the memory is located outside the communication apparatus. In another possible implementation, the memory is located inside the communication apparatus. In this embodiment of this application, the processor and the memory may alternatively be integrated into one device. In other words, the processor and the memory may alternatively be integrated together. In a possible implementation, the communication apparatus further includes a transceiver. The transceiver is configured to: receive information and/or send information.

In a possible design, the communication apparatus further includes one or more communication interfaces. The one or more communication interfaces are coupled to the one or more processors, and the one or more communication interfaces are configured to communicate with a module other than the communication apparatus.

According to a fourteenth aspect, an embodiment of this application provides a communication apparatus. The communication apparatus includes an input/output interface and a logic circuit. The input/output interface is configured to: input and/or output information. The logic circuit is configured to perform the network handover method according to any one of the first aspect or the possible designs of the first aspect, the network handover method according to any one of the second aspect or the possible designs of the second aspect, the method according to any one of the third aspect or the possible designs of the third aspect, the network handover method according to any one of the fourth aspect or the possible designs of the fourth aspect, the network handover method according to any one of the fifth aspect or the possible designs of the fifth aspect, or the network handover method according to any one of the sixth aspect or the possible designs of the sixth aspect, and perform processing based on information and/or generate information.

According to a fifteenth aspect, an embodiment of this application provides a computer-readable storage medium. The computer-readable storage medium stores computer instructions or a program. When the computer instructions or the program is run on a computer, the network handover method according to any one of the first aspect or the possible designs of the first aspect is performed, the network handover method according to any one of the second aspect or the possible designs of the second aspect is performed, the network handover method according to any one of the third aspect or the possible designs of the third aspect is performed, the network handover method according to any one of the fourth aspect or the possible designs of the fourth aspect is performed, the network handover method according to any one of the fifth aspect or the possible designs of the fifth aspect is performed, or the network handover method according to any one of the sixth aspect or the possible designs of the sixth aspect is performed.

According to a sixteenth aspect, an embodiment of this application provides a computer program product including computer instructions. When the computer program product runs on a computer, the network handover method according to any one of the first aspect or the possible designs of the first aspect is performed, the network handover method according to any one of the second aspect or the possible designs of the second aspect is performed, the network handover method according to any one of the third aspect or the possible designs of the third aspect is performed, the network handover method according to any one of the fourth aspect or the possible designs of the fourth aspect is performed, the network handover method according to any one of the fifth aspect or the possible designs of the fifth aspect is performed, or the network handover method according to any one of the sixth aspect or the possible designs of the sixth aspect is performed.

According to a seventeenth aspect, an embodiment of this application provides a computer program. When the computer program is run on a computer, the network handover method according to any one of the first aspect or the possible designs of the first aspect is performed, the network handover method according to any one of the second aspect or the possible designs of the second aspect is performed, the network handover method according to any one of the third aspect or the possible designs of the third aspect is performed, the network handover method according to any one of the fourth aspect or the possible designs of the fourth aspect is performed, the network handover method according to any one of the fifth aspect or the possible designs of the fifth aspect is performed, or the network handover method according to any one of the sixth aspect or the possible designs of the sixth aspect is performed.

According to an eighteenth aspect, an embodiment of this application provides a chip, including: a processor. The processor is coupled to a memory, the memory is configured to store a program or instructions, and when the program or the instructions are executed by the processor, the chip is caused to perform the network handover method according to any one of the first aspect or the possible designs of the first aspect, the network handover method according to any one of the second aspect or the possible designs of the second aspect, the network handover method according to any one of the third aspect or the possible designs of the third aspect, the network handover method according to any one of the fourth aspect or the possible designs of the fourth aspect, the network handover method according to any one of the fifth aspect or the possible designs of the fifth aspect, or the network handover method according to any one of the sixth aspect or the possible designs of the sixth aspect.

For technical effects achieved by any design manner in the thirteenth aspect to the eighteenth aspect, refer to the technical effects achieved by any one of the first aspect or the possible designs of the first aspect, refer to the technical effects achieved by any one of the second aspect or the possible designs of the second aspect, refer to the technical effects achieved by any one of the third aspect or the possible designs of the third aspect, refer to the technical effects achieved by any one of the fourth aspect or the possible designs of the fourth aspect, refer to the technical effects achieved by any one of the fifth aspect or the possible designs of the fifth aspect, or refer to the technical effects achieved by any one of the sixth aspect or the possible designs of the sixth aspect.

According to a nineteenth aspect, an embodiment of this application provides a communication system. The communication system may include the communication apparatus according to any one of the seventh aspect or the possible designs of the seventh aspect, the communication apparatus according to any one of the eighth aspect or the possible designs of the eighth aspect, the communication apparatus according to any one of the ninth aspect or the possible designs of the ninth aspect, the communication apparatus according to any one of the tenth aspect or the possible designs of the tenth aspect, and the communication apparatus according to any one of the eleventh aspect or the possible designs of the eleventh aspect, or may further include the communication apparatus according to any one of the twelfth aspect or the possible designs of the twelfth aspect.

### BRIEF DESCRIPTION OF DRAWINGS

FIG. 1 is a diagram of research content of network sharing according to an embodiment of this application;
FIG. 2 is a diagram of network sharing according to an embodiment of this application;
FIG. 3 is a diagram of network handover based on inter-network roaming according to an embodiment of this application;
FIG. 4A to FIG. 4C are a diagram of a communication system according to an embodiment of this application;
FIG. 5 is a diagram of a 5G communication system according to an embodiment of this application;
FIG. 6 is a composition diagram of a communication apparatus according to an embodiment of this application;
FIG. 7A and FIG. 7B are a flowchart of a network handover method according to an embodiment of this application;
FIG. 8 is a flowchart of a process of establishing data forwarding tunnels according to an embodiment of this application;
FIG. 9 is a diagram of forwarding service data of a terminal device according to an embodiment of this application;
FIG. 10A and FIG. 10B are a flowchart of a network handover method according to an embodiment of this application;
FIG. 11 is a flowchart of a network handover method according to an embodiment of this application;
FIG. 12 is a flowchart of a network handover method according to an embodiment of this application;
FIG. 13 is a flowchart of a network handover method according to an embodiment of this application;
FIG. 14 is a flowchart of a network handover method according to an embodiment of this application;
FIG. 15 is a diagram of a communication apparatus according to an embodiment of this application; and
FIG. 16 is a diagram of a structure of a communication apparatus according to an embodiment of this application.

### DESCRIPTION OF EMBODIMENTS

Before embodiments of this application are described, technical terms in embodiments of this application are described.

**Network sharing:** When an access network and core networks are deployed, allowing a shared access network to access different core networks is a manner of sharing access network resources between operators. The network sharing enables the operators to improve network deployment as much as possible, improve overall network quality, and reduce network deployment costs.

A third generation partnership project (third generation partnership project, 3GPP) communication system supports different types of network sharing since Rel-5, and most of the different types of network sharing are inherited from a 5th generation (5th generation, 5G) mobile communication system (after Rel-15). 3GPP TS 23.251 allows the shared access network to access core networks of different operators, and the operators can share not only radio network elements but also radio resources. With expansion of 5G deployment, more network sharing scenarios may occur according to strategies of different operators, business agreements, and specific rules/legislation of different countries.

With continuous development of the network sharing, one of challenges faced by the operators is to maintain interconnection (for example, maintain a large quantity of network interfaces) between the shared access network and core networks of the operators participating in the network sharing (that is, core networks participating in the network sharing), especially when there are a large quantity of shared access network devices, resulting in high network deployment and operation costs. Therefore, another network sharing scenario like a scenario in which there is no direct connection between a shared access network and core networks of operators participating in network sharing needs to be studied, to reduce network deployment and operation costs.

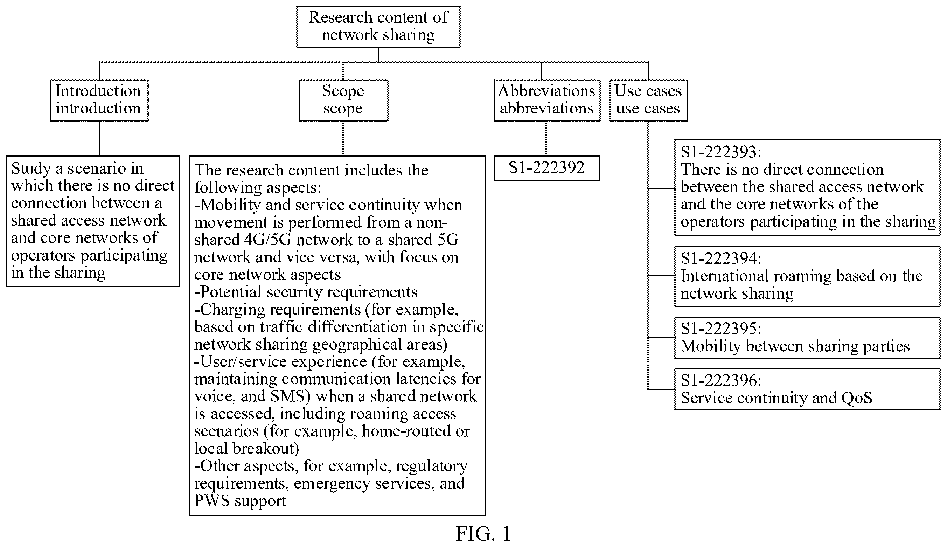

For example, with reference to research content of the network sharing shown in FIG. 1, service requirements of the research content mainly include: the network sharing is transparent to a user, to be specific, a terminal device of the user displays only a name of a subscribed operator, and a service provider of the terminal device is a subscribed operator of the terminal device; mobility management between the core networks participating in the network sharing is supported; service continuity and quality of service (quality of service, QoS) between the core networks participating in the network sharing is supported; international roaming based on the network sharing is supported; security requirements; charging requirements; user/service experience; regulatory requirements; emergency services; and requirements like public warning system (public warning system, PWS) support.

Based on this, the shared access network may directly access (in other words, be directly connected to) a core network 1, or may access (in other words, be indirectly connected to) a core network 2 through the core network 1.

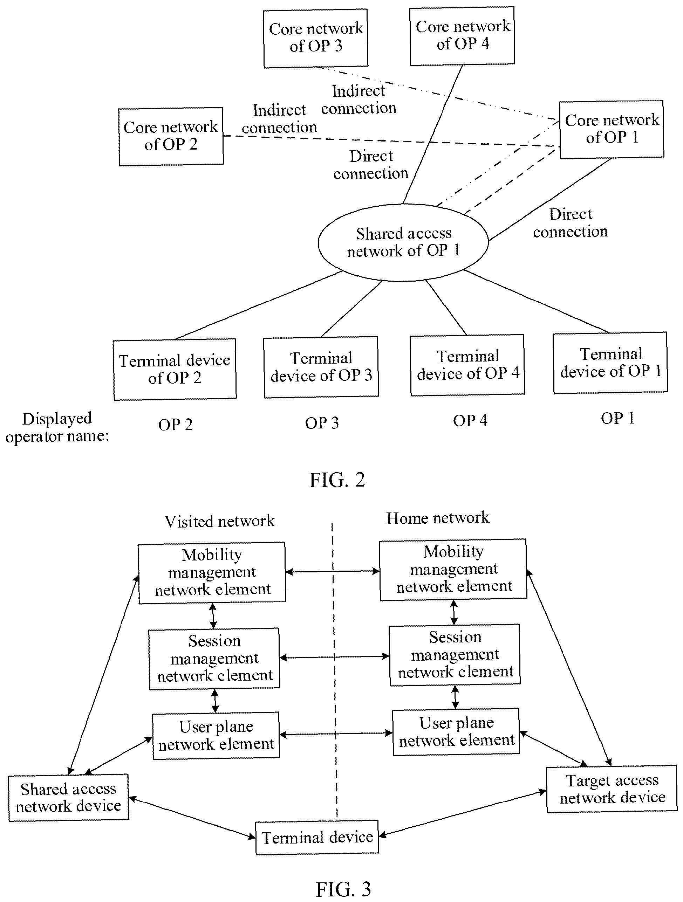

For example, as shown in FIG. 2, a radio access network is deployed for operator (operator, OP) 1. The radio access network may be shared with core networks of other operators (for example, OP 2, OP 3, and OP 4) under a specific condition. The shared access network may be directly connected to core networks participating in network sharing, for example, the shared access network may be directly connected to a core network of OP 1, and the shared access network may also be directly connected to a core network of OP 4. The shared access network may also be indirectly connected to core networks participating in the network sharing, for example, the shared access network may be indirectly connected to a core network of OP 2 through the core network of OP 1, and the shared access network may also be indirectly connected to a core network of OP 3 through the core network of OP 1.

The specific condition may be a specific 5G frequency band, a specific area, or the like. This is not limited.

The shared access network device may access the core network of OP 1 and the core network of OP 4 in a multi-operator core network (multi-operator core network, MOCN) manner.

Based on the foregoing network sharing, a terminal device (for example, UE 1) of OP 1, a terminal device (for example, UE 2) of OP 2, a terminal device (for example, UE 3) of OP 3, and a terminal device (for example, UE 4) of OP 4 may all access the shared access network of OP 1, and the terminal device of OP 2 and the terminal device of OP 3 may be indirectly routed back to the home core network through the core network of OP 1 (for example, the UE 2 is indirectly routed back to the core network of OP 2 through the core network of OP 1, and the UE 3 is indirectly routed back to the core network of OP 3 through the core network of OP 1), to implement network access.

An operator name displayed on the terminal device of OP 1 is a name of OP 1. An operator name displayed on the terminal device of OP 2 is a name of OP 2, and the terminal device of OP 2 is unaware of the core network of OP 1. An operator name displayed on the terminal device of OP 3 is a name of OP 3, and the terminal device of OP 3 is unaware of the core network of OP 1. An operator name displayed on the terminal device of OP 4 is a name of OP 4.

**Inter-network handover based on inter-network roaming:** When the terminal device moves out of coverage of a home network, the terminal device may access the home network through a visited network based on a shared access network device. When the terminal device moves to the coverage of the home network, the terminal device may be handed over from the shared access network device to an access network device of the home network, and access the home network via the access network device of the home network.

For example, with reference to the visited network and the home network shown in FIG. 3, the terminal device may be handed over from the shared access network device to the access network device of the home network based on the following steps.

Step 1: The terminal device sends a handover request to a mobility management network element of the visited network, and correspondingly, the mobility management network element of the visited network receives the handover request from the terminal device.

The handover request may be for requesting to hand over to a target access network device, the handover request may include global identifier information of the target access network device, and the target access network device may be the access network device of the home network of the terminal device.

The global identifier information of the target access network device may include a public land mobile network (public land mobile network, PLMN) to which the target access network device belongs and identifier information of the target access network device in the PLMN.

Optionally, the handover request may further include global identifier information of the terminal device.

The global identifier information of the terminal device may include a PLMN to which the terminal device belongs and identifier information of the terminal device in the PLMN.

For example, the global identifier information of the terminal device may be a subscription permanent identifier (subscription permanent identifier, SUPI) of the terminal device.

Step 2: The mobility management network element of the visited network sends a handover request to a mobility management network element of the home network, and correspondingly, the mobility management network element of the home network receives the handover request from the mobility management network element of the visited network.

The mobility management network element of the visited network may determine, based on the global identifier information of the terminal device, the PLMN to which the terminal device belongs, and determine, based on the global identifier information of the target access network device, the PLMN to which the target access network device belongs. When the PLMN to which the target access network device belongs is the same as the PLMN to which the terminal device belongs, it may be determined that the terminal device needs to be handed over to the home network, and the handover request is then sent to the mobility management network element of the home network.

Step 3: The mobility management network element of the home network interacts with another network element on a home network side based on the handover request, to establish a session for the terminal device.

A session management network element of the home network may interact with the mobility management network element of the home network and a user plane network element of the home network, to establish the session for the terminal device.

Step 4: The session management network element of the home network and a session management network element of the visited network establish a session for the terminal device.

The session management network element of the home network and the session management network element of the visited network may exchange tunnel information allocated by the user plane network element of the home network and tunnel information allocated by a user plane network element of the visited network, to implement communication between the user plane network element of the home network and the user plane network element of the visited network.

Optionally, the session management network element of the home network may further interact with the session management network element of the visited network, to obtain context information of the terminal device.

Step 5: The session management network element of the home network sends a session establishment complete response to the mobility management network element of the home network, and correspondingly, the mobility management network element of the home network receives the session establishment complete response from the session management network element of the home network.

Step 6: The mobility management network element of the home network sends a handover complete response to the mobility management network element of the visited network, and correspondingly, the mobility management network element of the visited network receives the handover complete response from the mobility management network element of the home network.

Step 7: The mobility management network element of the visited network may notify, via the shared access network device, the terminal device to perform the handover.

Step 8: The terminal device is handed over to the target access network device.

The foregoing network handover based on the inter-network roaming supports only the handover between the shared access network device and the access network device of the home network. In a moving process, when the terminal device needs to be handed over from accessing the home network through a visited network 1 to accessing the home network through a visited network 2, if there is no connection between the visited network 1 and the visited network 2, how to implement the handover of the terminal device from the visited network 1 to the visited network 2 and ensure service continuity of the terminal device in a handover process becomes a technical problem to be urgently resolved.

To resolve the foregoing technical problem, an embodiment of this application provides a network handover method. In the method, a first session management network element of a first network may receive a first request from a first mobility management network element of the first network, where the first request is for requesting to establish a session for a terminal device, the first request may include identifier information of a second session management network element of a second network, and the second network is a home network of the terminal device; and send, to the second session management network element, a second request for requesting to obtain context information of the terminal device, receive a second response from the second session management network element, and establish the session for the terminal device based on the second response, where the second response includes the context information that is of the terminal device and that is stored in a third session management network element, and the third session management network element is a network element that establishes a session for the terminal device in a third network.

In this embodiment of this application, when the terminal device needs to be handed over from the third network to the first network, the second session management network element of the home network (namely, the second network) of the terminal device may assist the first session management network element in obtaining the context information that is of the terminal device and that is stored in the third session management network element, so that the first session management network element may establish the session for the terminal device based on the context information of the terminal device, to implement handover of the terminal device between different visited networks (that is, implement the handover of the terminal device between the third network and the first network), and ensure service continuity of the terminal device in a handover process, thereby improving communication performance.

The following describes implementations of embodiments of this application in detail with reference to the accompanying drawings in this specification.

The network handover method provided in embodiments of this application may be applied to any communication system. The communication system may be a 3GPP communication system, for example, a long term evolution (long term evolution, LTE) system, or may be a 5G mobile communication system, a new radio (new radio, NR) communication system, or a new radio vehicle-to-everything (vehicle-to-everything, NR V2X) system. Alternatively, the network handover method may be applied to an LTE and 5G hybrid networking system, a non-terrestrial communication network (non-terrestrial network, NTN) system, a device-to-device (device-to-device, D2D) communication system, a machine-to-machine (machine-to-machine, M2M) communication system, an internet of things (internet of things, IoT), and another next generation communication system, for example, a future communication system like 6G. Alternatively, the communication system may be a non-3GPP communication system. This is not limited.

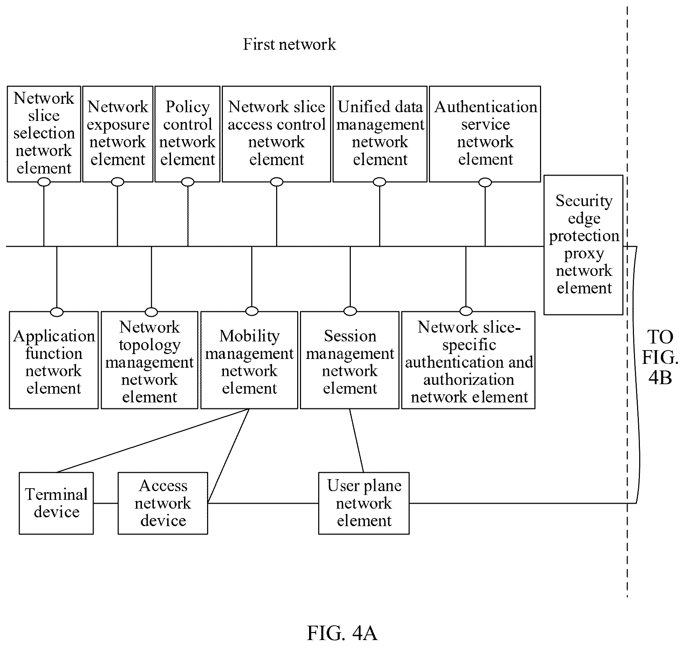

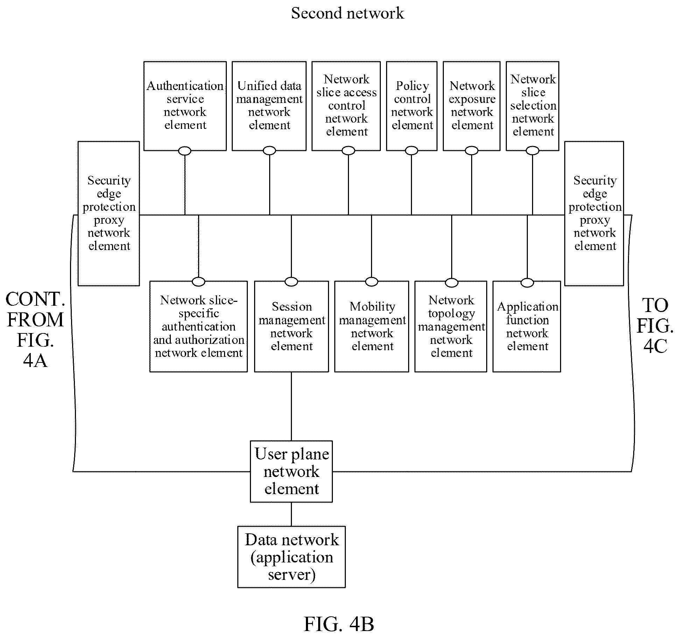

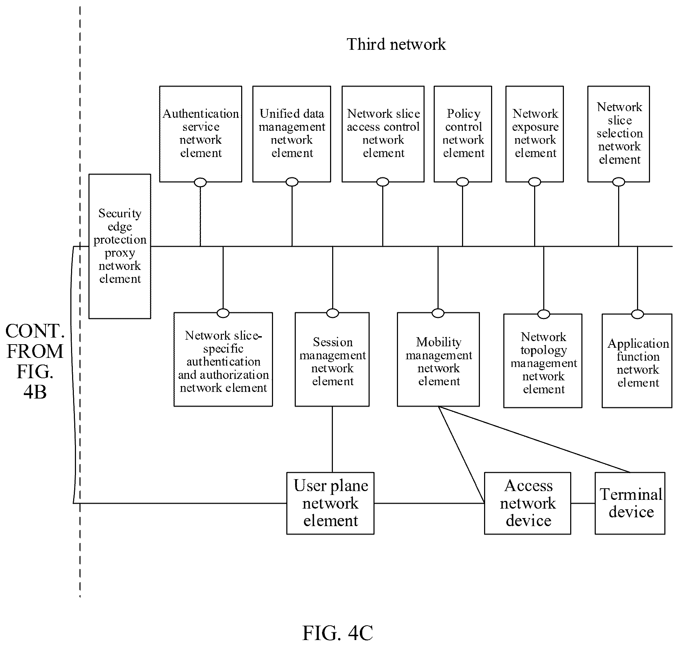

The following uses FIG. 4A to FIG. 4C as an example to describe a communication system provided in embodiments of this application.

FIG. 4A to FIG. 4C is a diagram of a communication system according to an embodiment of this application. As shown in FIG. 4A to FIG. 4C, the communication system may include a first network, a second network, and a third network, and each network may include an access network device and a core network device.

For example, the second network is a home network of a terminal device. When the terminal device is located within coverage of the second network, the terminal device may access a core network of the second network via an access network device of the second network. When the terminal device is located within coverage of the first network, the terminal device may access a core network of the second network via a shared access network device of the first network and a core network of the first network. When the terminal device is located within coverage of the third network, the terminal device may access a core network of the second network via a shared access network device of the third network and a core network of the third network. The terminal device may be further handed over among an access network device of the first network, an access network device of the second network, and an access network device of the third network.

In FIG. 4A to FIG. 4C, the terminal device may be located within beam/cell coverage of the access network device, and the access network device may provide a communication service for the terminal device.

The terminal device in FIG. 4A to FIG. 4C may be a device having a wireless transceiver function or a chip or a chip system that may be disposed in the device, may allow a user to access a network, and is a device configured to provide voice and/or data connectivity for the user. The terminal device may also be referred to as user equipment (user equipment, UE), a subscriber unit (subscriber unit), a terminal (terminal), a mobile station (mobile station, MS), a mobile terminal (mobile terminal, MT), or the like.

For example, the terminal device in FIG. 4A to FIG. 4C may be a mobile phone (mobile phone), a tablet computer, or a computer having the wireless transceiver function. Alternatively, the terminal device may be a subscriber station, a mobile station, a remote station, a remote terminal device, a mobile terminal device, a user terminal device, a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device, a processing device connected to a wireless modem, a vehicle-mounted device, a wearable device, a terminal device in the Internet of Things, a household appliance, a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in a smart city (smart city), a wireless terminal in a smart home (smart home), a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (UAV to UAV, U2U) communication capability, a terminal device in a future network, a terminal device in a future evolved public land mobile network (public land mobile network, PLMN), or the like. This is not limited.

The access network device in FIG. 4A to FIG. 4C may be any device that is deployed in an access network and that can perform wireless communication with the terminal device, may be a chip or a chip system that can be disposed in the foregoing device, or may be a logical node, a logical module, or a function implemented in a software manner, and may be configured to implement functions such as a radio physical control function, resource scheduling and radio resource management, radio access control, and mobility management. Specifically, the network device may be a device supporting wired access, or may be a device supporting wireless access.

For example, the access network device may include one or more access network (access network, AN)/radio access network (radio access network, RAN) nodes. The AN/RAN node may be a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like.

In another example, alternatively, the access network device may be a device including a central unit (central unit, CU) node, including a distributed unit (distributed unit, DU) node, or including a CU node and a DU node. For example, the access network device may be divided into a CU and a DU from a perspective of logical functions. Some protocol layer functions are centrally controlled by the CU, and a part or all of the remaining protocol layer functions are distributed in the DU, and the CU centrally controls the DU. Further, the central unit CU may be further divided into a control plane (CU-CP) and a user plane (CU-UP). In different systems, a CU (including a CU-CP or a CU-UP) or a DU may have different names. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP.

A core network device in each network in FIG. 4A to FIG. 4C may include one or more of the following: a mobility management network element, a session management network element, a user plane network element, a network topology management network element, a unified data management network element, and a security edge protection proxy network element.

The mobility management network element in FIG. 4A to FIG. 4C is mainly responsible for work such as access authentication and mobility management of the terminal device, signaling exchange between functional network elements, and termination of non-access stratum (non-access stratum, NAS) signaling security, for example, managing a registration status of a user, a reachability status, N1/N2 interface signaling transmission, access authentication and authorization, a connection status of the user, user registration and network access, tracking area update, user authentication during cell handover, and key security.

The session management network element in FIG. 4A to FIG. 4C mainly provides work such as session management (for example, session establishment, modification, and release), internet protocol (internet protocol, IP) address allocation and management, and user plane network element selection and control for a session of the terminal device.

The user plane network element in FIG. 4A to FIG. 4C is mainly responsible for providing user plane functions such as forwarding and processing of a user packet, a connection to a data network (data network, DN), a session anchor, and QoS policy execution.

The network topology management network element in FIG. 4A to FIG. 4C mainly provides registration and discovery capabilities of a network element in a network.

The unified data management network element in FIG. 4A to FIG. 4C may provide a capability of storing subscription data, policy data, and capability exposure-related data.

The security edge protection proxy network element in FIG. 4A to FIG. 4C is mainly responsible for providing control-plane interface signaling filtering and policies and network element topology hiding in a PLMN during cross-PLMN interaction.

Optionally, the core network device in each network in FIG. 4A to FIG. 4C may further include one or more of the following: a network slice selection network element, a network exposure network element, a policy control network element, a network slice admission control network element, an authentication service network element, an application function network element, a network slice-specific authentication and authorization network element, and the like. This is not limited.

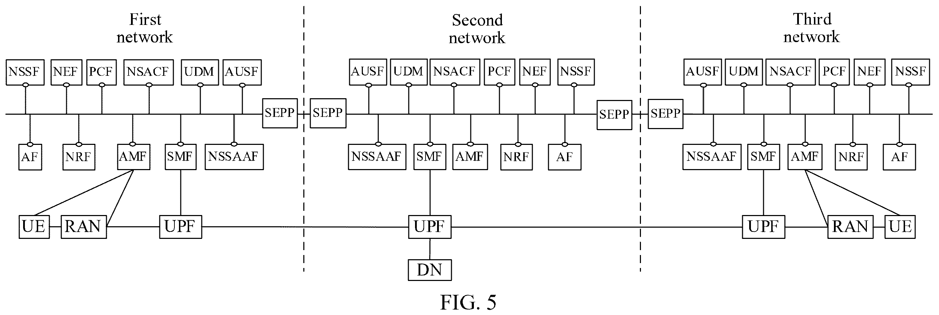

For example, the communication system shown in FIG. 4A to FIG. 4C is a 5G communication system. As shown in FIG. 5, a network element or an entity corresponding to the foregoing access network device may be a RAN in the 5G communication system, a network element or an entity corresponding to the mobility management network element may be an access and mobility management function (access and mobility management function, AMF) in the 5G communication system, a network element or an entity corresponding to the session management network element may be a session management function (session management function, SMF) in the 5G communication system, a network element or an entity corresponding to the user plane network element may be a user plane function (user plane function, UPF) in the 5G communication system, a network element or an entity corresponding to the network topology management network element may be a network repository function (network repository function, NRF) in the 5G communication system, a network element or an entity corresponding to the security edge protection proxy network element may be a security edge protection proxy (security edge protection proxy, SEPP) in the 5G communication system, a network element or an entity corresponding to the network slice selection network element may be a network slice selection function (network slice selection function, NSSF) in the 5G communication system, a network element or an entity corresponding to the network exposure network element may be a network exposure function (network exposure function, NEF) in the 5G communication system, a network element or an entity corresponding to the policy control network element may be a policy control function (policy control function, PCF) in the 5G communication system, a network element or an entity corresponding to the network slice admission control network element may be a network slice admission control function (network slice admission control function, NSACF) in the 5G communication system, a network element or an entity corresponding to the unified data management network element may be a unified data repository (unified data repository, UDR) or a unified data management (unified data management, UDM) in the 5G communication system, a network element or an entity corresponding to the authentication service network element may be an authentication service function (authentication server function, AUSF) in the 5G communication system, a network element or an entity corresponding to the application function network element may be an application function (application function, AF) in the 5G communication system, and a network element or an entity corresponding to the network slice-specific authentication and authorization network element may be a network slice-specific authentication and authorization function (network slice-specific authentication and authorization function, NSSAAF) in the 5G communication system.

As shown in FIG. 5, a RAN communicates with an AMF through an N2 interface, the RAN may further communicate with a UPF through an N3 interface, the UPF may communicate with an SMF through an N4 interface, and the UPF may further communicate with an application server in a DN through an N6 interface. Core network devices may invoke a service-based interface of each other to obtain a service of each other. For example, the core network device may invoke, through an Namf interface, a service provided by the AMF, the core network device may invoke, through an Nsmf interface, a service provided by the SMF, the core network device may invoke, through an Nnrf interface, a service provided by an NRF, the core network device may invoke, through an Nnssf interface, a service provided by an NSSF, the core network device may invoke, through an Nnef interface, a service provided by an NEF, the core network device may invoke, through an Npcf interface, a service provided by the PCF, the core network device may invoke, through an Nnsacf interface, a service provided by an NSACF, the core network device may invoke, through an Nudm interface, a service provided by a UDM, the core network device may invoke, through an Nudr interface, a service provided by the UDR, the core network device may invoke, through an Nausf interface, a service provided by an AUSF, the core network device may invoke, through an Naf interface, a service provided by an AF, and the core network device may invoke, through an Nnssaaf interface, a service provided by an NSSAAF.

It should be noted that the terminal device, the access network device, and the core network device in embodiments of this application each may be one or more chips, or may be a system on chip (system on chip, SoC), or the like. FIG. 4A to FIG. 4C or FIG. 5 is merely an example accompany drawing, and a quantity of devices included in FIG. 4A to FIG. 4C or FIG. 5 is not limited. Names of the devices and the links in FIG. 4A to FIG. 4C or FIG. 5 are not limited. In addition to the names shown in FIG. 4A to FIG. 4C or FIG. 5, the devices and the links may have other names. This is not limited.

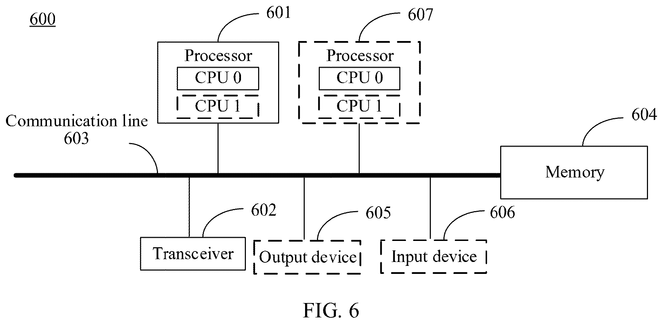

During specific implementation, each terminal device, each access network device, and each core network device shown in FIG. 4A to FIG. 4C or FIG. 5 may all use a composition structure shown in FIG. 6, or include components shown in FIG. 6. FIG. 6 is a composition diagram of a communication apparatus 600 according to an embodiment of this application. The communication apparatus 600 may be a terminal device, or a chip or a system on chip in the terminal device; may be an access network device, or a chip or a system on chip in the access network device; or may be a core network device, or a chip or a system on chip in the core network device. As shown in FIG. 6, the communication apparatus 600 includes a processor 601, a transceiver 602, and a communication line 603.

Further, the communication apparatus 600 may further include a memory 604. The processor 601, the memory 604, and the transceiver 602 may be connected through the communication line 603.

The processor 601 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 601 may be another apparatus having a processing function, for example, a circuit, a device, or a software module. This is not limited.

The transceiver 602 is configured to communicate with another device or another communication network. The another communication network may be an Ethernet, a radio access network (radio access network, RAN), a wireless local area network (wireless local area network, WLAN), or the like. The transceiver 602 may be a module, a circuit, a transceiver, or any apparatus that can implement communication.

The communication line 603 is configured to transmit information between the components included in the communication apparatus 600.

The memory 604 is configured to store instructions. The instructions may be a computer program.

The memory 604 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or the like. This is not limited.

It should be noted that the memory 604 may exist independently of the processor 601, or may be integrated with the processor 601. The memory 604 may be configured to store instructions, program code, some data, or the like. The memory 604 may be located inside the communication apparatus 600, or may be located outside the communication apparatus 600. This is not limited. The processor 601 is configured to execute the instructions stored in the memory 604, to implement a network handover method provided in the following embodiment of this application.

In an example, the processor 601 may include one or more CPUs, for example, a CPU 0 and a CPU 1 in FIG. 6.

In an optional implementation, the communication apparatus 600 includes a plurality of processors. For example, in addition to the processor 601 in FIG. 6, the communication apparatus may further include a processor 607.

In an optional implementation, the communication apparatus 600 further includes an output device 605 and an input device 606. For example, the input device 606 is a device, for example, a keyboard, a mouse, a microphone, or a joystick, and the output device 605 is a device, for example, a display or a speaker (speaker).

It should be noted that the communication apparatus 600 may be a desktop computer, a portable computer, a network server, a mobile phone, a tablet computer, a wireless terminal, an embedded device, a chip system, or a device having a structure similar to that in FIG. 6. In addition, a composition structure shown in FIG. 4A to FIG. 4C does not constitute a limitation on the communication apparatus. In addition to the components shown in FIG. 6, the communication apparatus may include more or fewer components than those shown in the figure, or some components may be combined, or different component arrangements may be used.

In embodiments of this application, the chip system may include a chip, or may include a chip and another discrete device.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

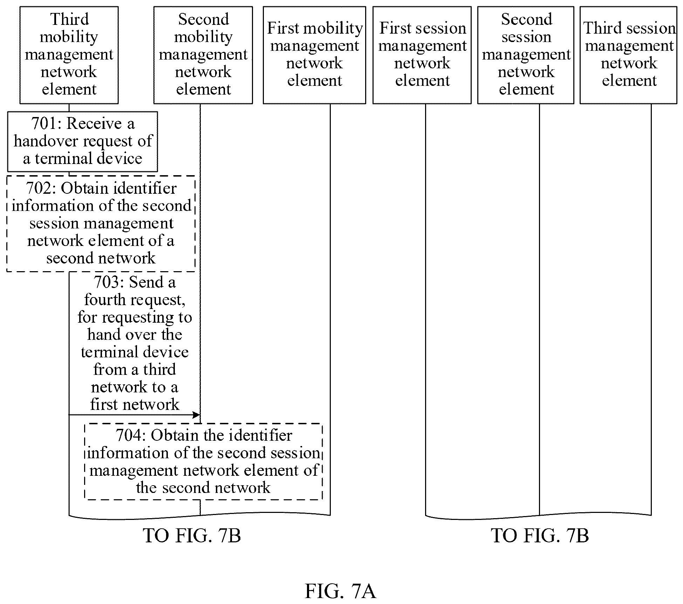

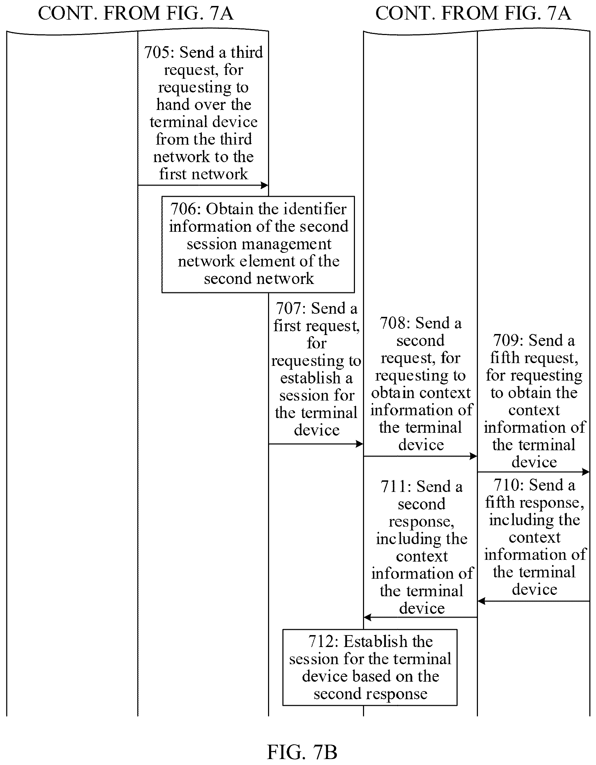

With reference to the communication system shown in FIG. 4A to FIG. 4C or FIG. 5, a network handover method provided in an embodiment of this application is described below with reference to FIG. 7A and FIG. 7B. A terminal device, an access network device, and core network devices (such as a mobility management network element, a session management network element, and a user plane network element) described in the following embodiments may all have the components shown in FIG. 6. Processing performed by a single execution body (the terminal device, the access network device, or the core network device) shown in embodiments of this application may alternatively be performed by a plurality of execution bodies. These execution bodies may be logically and/or physically separated. This is not limited.

For example, refer to FIG. 7A and FIG. 7B. The following describes the network handover method provided in this embodiment of this application by using an example in which a home network of the terminal device is a second network and the terminal device is handed over from a source access network device of a third network to a target access network device of a first network.

The source access network device may be an access network device shared by the third network and the second network, and the terminal device may access a core network of the second network via the source access network device and a core network of the third network. The target access network device may be an access network device shared by the second network and the first network, and the terminal device may access the core network of the second network via the target access network device and a core network of the first network.

FIG. 7A and FIG. 7B are a flowchart of a network handover method according to an embodiment of this application. As shown in FIG. 7A and FIG. 7B, the method may include the following steps.

Step 701: The terminal device sends a handover request to a third mobility management network element of the third network, and correspondingly, the third mobility management network element receives the handover request from the terminal device.

The third mobility management network element may be any one or more of one or more mobility management network elements in the third network that correspond to a session established by the third network for the terminal device. The handover request may include global identifier information of the target access network device, and the handover request may be for requesting to hand over to the target access network device.

The target access network device belongs to the first network, and the global identifier information of the target access network device may include second identifier information and identifier information of the target access network device in the first network. The second identifier information may be network identifier information of the first network, for example, a PLMN ID of the first network. Alternatively, a PLMN may be a PLMN selected when a terminal device of the first network accesses the first network, namely, a selected PLMN, or may be a home PLMN of the terminal device of the first network. Alternatively, the second identifier information may be described as identifier information that is allocated by the first network to a terminal device of the first network and that is used to access the first network, the second identifier information may be described as a PLMN of the network (namely, the first network) to which the target access network device belongs, or the like. This is not limited.

Optionally, the handover request may further include first identifier information.

The first identifier information may be identifier information that is allocated by the third network to the terminal device of the second network and that is used to access the third network.

For example, the first identifier information may be a PLMN that is allocated by the third network to the terminal device of the second network and that is used to access the third network. The PLMN may also be referred to as a selected (selected) PLMN, an inter-PLMN, or the like. This is not limited.

Optionally, the handover request may further include global identifier information of the terminal device. The home network of the terminal device is the second network, the global identifier information of the terminal device may include fourth identifier information and identifier information of the terminal device in the second network, and the fourth identifier information may be identifier information that is allocated by the second network to the terminal device of the second network and that is used to access the second network.

For example, the fourth identifier information may be a PLMN of the second network, this is described as that the fourth identifier information is a PLMN of the home network (namely, the second network) of the terminal device, or the fourth identifier information is described as a PLMN to which the terminal device belongs. This is not limited.

For example, the global identifier information of the terminal device may be an SUPI.

Optionally, the handover request may further include identifier information of the session of the terminal device.

Optionally, the terminal device may send the handover request to the third mobility management network element when moving from coverage of the source access network device to coverage of the target access network device.

Step 702: The third mobility management network element obtains identifier information of a second session management network element of the second network based on the handover request.

In a first possible design, when the third network establishes a session for the terminal device, the third mobility management network element may store an association relationship between identifier information of the established session and identifier information of a second session management network element. When receiving the handover request from the terminal device, the third mobility management network element may determine, from the prestored association relationship based on the identifier information of the session of the terminal device in the handover request, identifier information that is of a second session management network element and that corresponds to the identifier information of the session of the terminal device.

The second session management network element determined in this possible design may be any one or more of one or more session management network elements in the second network that correspond to a session established by the second network for the terminal device.

In a second possible design, when the third network establishes a session for the terminal device, a third session management network element of the third network may store an association relationship between identifier information of the established session and identifier information of a second session management network element. When receiving the handover request from the terminal device, the third mobility management network element may determine the identifier information of the session of the terminal device based on the handover request, and then send the identifier information of the session to the third session management network element. The third session management network element determines, from the prestored association relationship based on the identifier information of the session, identifier information that is of a second session management network element and that corresponds to the identifier information of the session, and sends the identifier information of the second session management network element to the third mobility management network element.

The third session management network element may be any one or more of one or more session management network elements in the third network that correspond to a session established by the third network for the terminal device (or the third session management network element may be described as a network element that establishes the session for the terminal device in the third network). The second session management network element determined in this possible design may be any one or more of one or more session management network elements in the second network that correspond to a session established by the second network for the terminal device.

In a third possible design, when receiving the handover request from the terminal device, the third mobility management network element may determine the identifier information of the session of the terminal device based on the handover request, and send the identifier information of the session to a unified data management network element. The unified data management network element determines, from a prestored association relationship based on the identifier information of the session, identifier information that is of a second session management network element and that corresponds to the identifier information of the session, and sends the identifier information of the second session management network element to the third mobility management network element.

The unified data management network element may be a unified data management network element of the third network (or referred to as a third unified data management network element), or may be a unified data management network element of the second network (or referred to as a second unified data management network element). The second session management network element determined in this possible design may be any one or more of one or more session management network elements in the second network that correspond to a session established by the second network for the terminal device.

It should be noted that, when receiving the handover request sent by the terminal device, the third mobility management network element may perform step 702, to obtain the identifier information of the second session management network element, and then perform the following step 703. Alternatively, when receiving the handover request sent by the terminal device, the third mobility management network element may directly perform the following step 703 without performing step 702.

Step 703: The third mobility management network element sends a fourth request to a second mobility management network element of the second network, and correspondingly, the second mobility management network element receives the fourth request from the third mobility management network element.

The second mobility management network element may be a mobility management network element that is in the second network and that is specially configured to forward a handover request between different visited networks, or may be any one or more of one or more mobility management network elements corresponding to a session established by the second network for the terminal device. The fourth request may be for requesting to hand over the terminal device from the third network to the first network.

The third mobility management network element may include, in the fourth request, the identifier information of the target access network device and the global identifier information of the terminal device that are in the handover request.

Optionally, the fourth request may further include the first identifier information.

The first identifier information may be identifier information that is allocated by the third network to the terminal device of the second network and that is used to access the third network.

For example, the first identifier information may be a PLMN that is allocated by the third network to the terminal device of the second network and that is used to access the third network. The PLMN may also be referred to as a selected (selected) PLMN, an inter-PLMN, or the like. This is not limited.

Optionally, if the third mobility management network element performs step 702, the fourth request may include the identifier information of the second session management network element determined in step 702. If the third mobility management network element does not perform step 702, the fourth request does not include the identifier information of the second session management network element determined in step 702.

Optionally, the fourth request may further include the identifier information of the session established by the third network for the terminal device.

Optionally, the fourth request may further include network slice information corresponding to the terminal device.

Optionally, the fourth request may further include identifier information of a third session management network element.

The third mobility management network element may determine the identifier information of the third session management network element based on the identifier information of the session established by the third network for the terminal device.

Optionally, the fourth request may further include context information that is of the terminal device and that is stored in the third mobility management network element.

Optionally, the fourth request may be an AMF redirection message.

Step 704: The second mobility management network element obtains the identifier information of the second session management network element of the second network.

In a first possible design, when the fourth request includes the identifier information of the second session management network element, the second mobility management network element may determine the identifier information of the second session management network element based on the fourth request.

The second session management network element determined in this possible design may be any one or more of one or more session management network elements in the second network that correspond to a session established by the second network for the terminal device.

In a second possible design, when the second network establishes a session for the terminal device, the second mobility management network element may store an association relationship between identifier information of the established session and identifier information of a second session management network element. When receiving the fourth request from the third mobility management network element, the second mobility management network element may determine, based on the fourth request, identifier information of a session established for the terminal device, and then determine, from the prestored association relationship based on the identifier information, identifier information that is of a second session management network element and that corresponds to the identifier information of the session of the terminal device.

If the fourth request includes the identifier information of the session established by the third network for the terminal device, the second mobility management network element may determine the identifier information of the second session management network element based on the identifier information. Alternatively, the second mobility management network element may determine the identifier information of the session of the terminal device based on the global identifier information of the terminal device in the fourth request, and then determine the identifier information of the second session management network element.

The second session management network element determined in this possible design may be any one or more of one or more session management network elements in the second network that correspond to a session established by the second network for the terminal device.

In a third possible design, when the third network establishes a session for the terminal device, the third session management network element may store an association relationship between identifier information of the established session and identifier information of a second session management network element. When receiving the fourth request from the third mobility management network element, the second mobility management network element may determine, based on the fourth request, the identifier information of the session established for the terminal device, and then send the identifier information of the session to the third session management network element. The third session management network element determines, from the prestored association relationship based on the identifier information of the session, identifier information that is of a second session management network element and that corresponds to the identifier information of the session, and sends the identifier information of the second session management network element to the second mobility management network element.

The second session management network element determined in this possible design may be any one or more of one or more session management network elements in the second network that correspond to a session established by the second network for the terminal device.

In a fourth possible design, when the second network establishes a session for the terminal device, the second unified data management network element may store an association relationship between identifier information of the established session and identifier information of a second session management network element. When receiving the fourth request from the third mobility management network element, the second mobility management network element may determine, based on the fourth request, identifier information of a session established for the terminal device, and then send the identifier information of the session to the second unified data management network element. The second unified data management network element determines, from the prestored association relationship based on the identifier information of the session, identifier information that is of a second session management network element and that corresponds to the identifier information of the session, and sends the identifier information of the second session management network element to the second mobility management network element.

The second session management network element determined in this possible design may be any one or more of one or more session management network elements in the second network that correspond to a session established by the second network for the terminal device.

In a fifth possible design, the second mobility management network element may alternatively randomly determine the identifier information of the second session management network element based on a preset configuration.

Network element information of one or more session management network elements in the second network may be preconfigured on the second mobility management network element. When receiving the fourth request from the third mobility management network element, the second mobility management network element may randomly select the one or more session management network elements from the preconfigured network element information as the second session management network element. That is, the second session management network element determined in this possible design may be any one or more session management network elements in the second network. The second session management network element may be any one or more of one or more session management network elements in the second network that correspond to a session established by the second network for the terminal device; or the second session management network element may be one or more session management network elements that are in the second network and that are unrelated to a session established by the second network for the terminal device.

It should be noted that, when receiving the fourth request sent by the third mobility management network element, the second mobility management network element may perform step 704, to obtain the identifier information of the second session management network element, and then perform the following step 705. Alternatively, when receiving the fourth request sent by the third mobility management network element, the second mobility management network element may directly perform the following step 705 without performing step 704.

Step 705: The second mobility management network element sends a third request to a first mobility management network element of the first network, and correspondingly, the first mobility management network element receives the third request from the second mobility management network element.

The third request may be for requesting to hand over the terminal device from the third network to the first network.

The second mobility management network element may determine the first identifier information based on the fourth request, and determine the second identifier information based on the global identifier information of the target access network device in the fourth request. The first identifier information is identifier information (for example, the inter-PLMN allocated by the third network) that is allocated by the third network to the terminal device of the second network and that is used to access the third network, and the second identifier information is identifier information (for example, the PLMN of the first network) that is allocated by the first network to the terminal device of the first network and that is used to access the first network.

The second mobility management network element may determine, based on the first identifier information, that the terminal device is an inter-network roaming subscriber.

The second mobility management network element may determine, based on the first identifier information and the second identifier information, that the terminal device is handed over from the third network to the first network. If supporting the handover of the terminal device from the third network to the first network, the second mobility management network element may send the third request to the first mobility management network element of the first network.

If the second mobility management network element supports the communication with the third network and supports the communication with the first network, it may be considered that the second mobility management network element supports the handover of the terminal device from the third network to the first network.

In a first possible design, the second mobility management network element may determine the first mobility management network element based on the second identifier information.

Network element information of mobility management network elements of different networks (for example, the network element information of the one or more mobility management network elements of the first network and the network element information of the one or more mobility management network elements of the third network) may be preconfigured on the second mobility management network element. When determining that the third request needs to be sent to the first mobility management network element of the first network, the second mobility management network element may determine the first network based on the second identifier information, and then randomly select the one or more mobility management network elements of the first network as the first mobility management network element from the preconfigured network element information.

That is, the first mobility management network element determined in this possible design may be any one or more mobility management network elements of the first network. The first mobility management network element may be a mobility management network element that is in the first network and that corresponds to the target access network device; or may be a mobility management network element that is in the first network and that is unrelated to the target access network device. This is not limited.

In a second possible design, the second mobility management network element may determine the first mobility management network element through a service discovery process.

The second mobility management network element may send a service discovery request to a topology management network element (or referred to as a second topology management network element) of the second network. The service discovery request may include the global identifier information of the target access network device, and the service discovery request is for requesting to discover the mobility management network element associated with the target access network device. The second topology management network element may send the service discovery request to a topology management network element of the first network (or referred to as a first topology management network element), and the first topology management network element determines, based on the service discovery request, the mobility management network element (namely, the first mobility management network element) corresponding to the target access network device, includes identifier information of the first mobility management network element in a service discovery response, and sends the service discovery response to the second mobility management network element via the second topology management network element.

That is, the first mobility management network element determined in this possible design may be a mobility management network element that is in the first network and that corresponds to the target access network device.

Based on the foregoing descriptions, when sending the third request to the first mobility management network element, the second mobility management network element may include the information in the fourth request in the third request.

The third request may include the global identifier information of the target access network device and the global identifier information of the terminal device.

Optionally, if the second mobility management network element performs step 704, the third request may include the identifier information of the second session management network element determined in step 704. If the second mobility management network element does not perform step 704, the third request does not include the identifier information of the second session management network element determined in step 704.

Optionally, the third request may further include the identifier information of the session established by the third network for the terminal device.

Optionally, the third request may further include the network slice information corresponding to the terminal device.

Optionally, the third request may further include the identifier information of the third session management network element.

Optionally, the third request may further include the context information that is of the terminal device and that is stored in the third mobility management network element.

Optionally, the third request may further include third identifier information, and the third identifier information is identifier information that is allocated by the first network to the terminal device of the second network and that is used to access the first network.

For example, the third identifier information may be a PLMN that is allocated by the first network to the terminal device of the second network and that is used to access the first network. The PLMN may also be referred to as a selected (selected) PLMN, an inter-PLMN, or the like. This is not limited.

Specifically, when determining to send the third request to the first mobility management network element, the second mobility management network element may determine the third identifier information, and send the third request to the first mobility management network element by using the third identifier information.

Step 706: The first mobility management network element obtains the identifier information of the second session management network element of the second network.

In a first possible design, when the third request includes the identifier information of the second session management network element, the first mobility management network element may determine the identifier information of the second session management network element based on the third request.

The second session management network element determined in this possible design may be any one or more of one or more session management network elements in the second network that correspond to a session established by the second network for the terminal device; or may be one or more session management network elements that are in the second network and that are unrelated to a session established by the second network for the terminal device.

In a second possible design, when the third request includes the network slice information corresponding to the terminal device, the first mobility management network element may determine the identifier information of the second session management network element based on the network slice information.

The first mobility management network element may determine the identifier information of the second session management network element through a service discovery process.

For example, the first mobility management network element may send a service discovery request to the first topology management network element, where the service discovery request may include the network slice information, and the service discovery request is for requesting to discover the session management network element associated with the network slice information. The first topology management network element may send the service discovery request to the second topology management network element, and the second topology management network element determines, based on the service discovery request, the session management network element (namely, the second session management network element) corresponding to the network slice information, includes the identifier information of the second session management network element in a service discovery response, and sends the service discovery response to the first mobility management network element via the first topology management network element.

The second session management network element determined in this possible design may be any one or more of one or more session management network elements in the second network that correspond to a session established by the second network for the terminal device; or may be one or more session management network elements that are in the second network and that are unrelated to a session established by the second network for the terminal device.

In a third possible design, the first mobility management network element may alternatively randomly determine the identifier information of the second session management network element based on a preset configuration.

Network element information of one or more session management network elements in the second network may be preconfigured on the first mobility management network element. When receiving the third request from the second mobility management network element, the first mobility management network element may randomly select the one or more session management network elements from the preconfigured network element information as the second session management network element. That is, the second session management network element determined in this possible design may be any one or more session management network elements in the second network. The second session management network element may be any one or more of one or more session management network elements in the second network that correspond to a session established by the second network for the terminal device; or the second session management network element may be one or more session management network elements that are in the second network and that are unrelated to a session established by the second network for the terminal device.

Step 707: The first mobility management network element sends a first request to the first session management network element of the first network, and correspondingly, the first session management network element receives the first request from the first mobility management network element of the first network.

The first request may be for requesting to establish the session for the terminal device, and the first request may include the identifier information of the second session management network element.

In a first possible design, when the third request includes the global identifier information of the target access network device, the first mobility management network element may determine, as the first session management network element based on the global identifier information of the target access network device, a session management network element that is in the first network and that corresponds to the target access network device.

In a second possible design, when the third request includes the network slice information, the first mobility management network element may determine, as the first session management network element based on the network slice information, a session management network element corresponding to the network slice information in the first network.

Based on the foregoing descriptions, when sending the first request to the first session management network element, the first mobility management network element may further include the information in the third request in the first request.

The first request may include the global identifier information of the target access network device and the global identifier information of the terminal device.

Optionally, the first request may further include the identifier information of the session established by the third network for the terminal device.

Optionally, the first request may further include the identifier information of the third session management network element.

Optionally, the first request may further include the context information that is of the terminal device and that is stored in the third mobility management network element.

Step 708: The first session management network element sends a second request to the second session management network element, and correspondingly, the second session management network element receives the second request from the first session management network element.

The second request may be for requesting to obtain the context information of the terminal device.

The first session management network element may determine the second session management network element based on the first request, and then send the second request to the second session management network element.

Optionally, when sending the second request to the second session management network element, the first session management network element may further include the information in the first request in the second request.

Optionally, the second request may further include the identifier information of the session established by the third network for the terminal device.

Optionally, the second request may further include the identifier information of the third session management network element.

Step 709: The second session management network element sends a fifth request to the third session management network element of the third network, and correspondingly, the third session management network element receives the fifth request from the second session management network element.

The fifth request may be for requesting to obtain the context information of the terminal device.

The second session management network element may determine the third session management network element based on the identifier information that is of the session established by the third network for the terminal device and that is included in the second request, and then send the fifth request to the third session management network element. Alternatively, the second session management network element may alternatively determine the third session management network element based on the identifier information that is of the third session management network element and that is included in the second request, and then send the fifth request to the third session management network element.

Optionally, the fifth request may include the identifier information of the session established by the third network for the terminal device.

Step 710: The third session management network element sends a fifth response to the second session management network element, and correspondingly, the second session management network element receives the fifth response from the third session management network element.

The fifth response may include the context information that is of the terminal device and that is stored in the third session management network element.

The third session management network element may determine the context information of the terminal device based on the fifth request, then include the context information in the fifth response, and send the fifth response to the second session management network element.

Step 711: The second session management network element sends a second response to the first session management network element, and correspondingly, the first session management network element receives the second response from the second session management network element.

The second response may include the context information that is of the terminal device and that is stored in the third session management network element.

Step 712: The first session management network element establishes the session for the terminal device based on the second response.

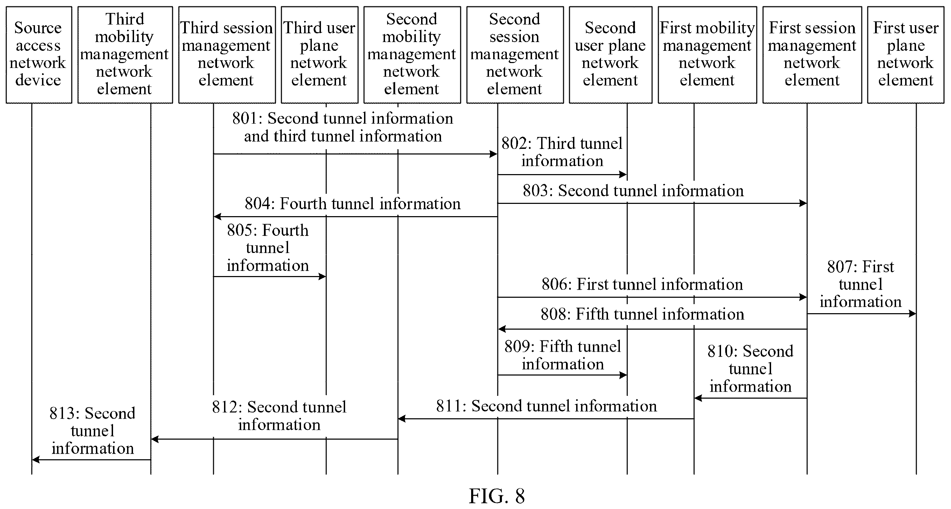

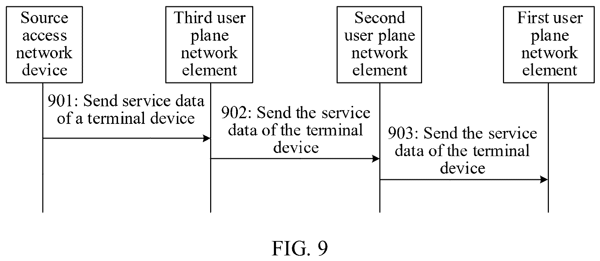

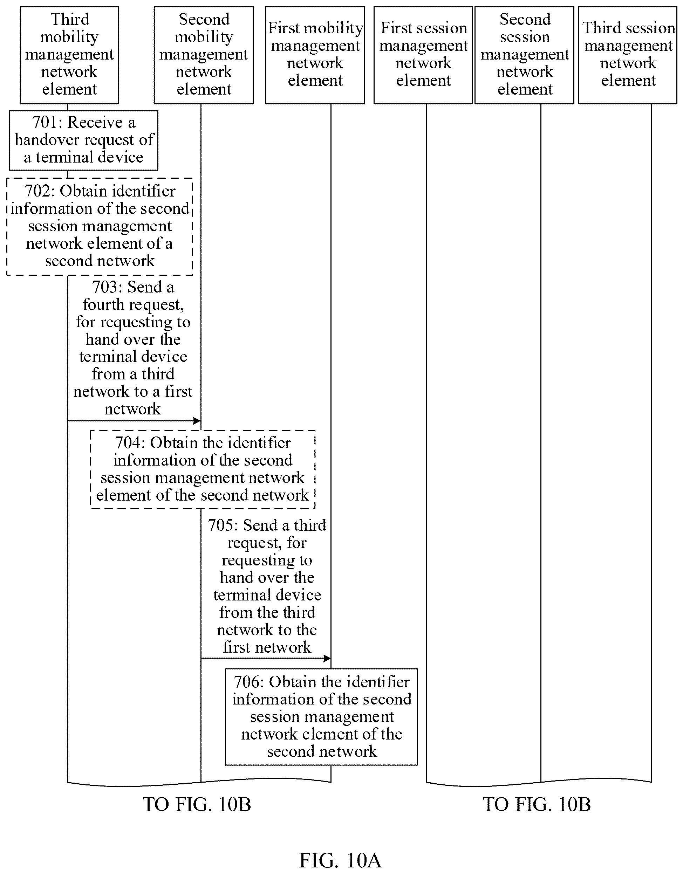

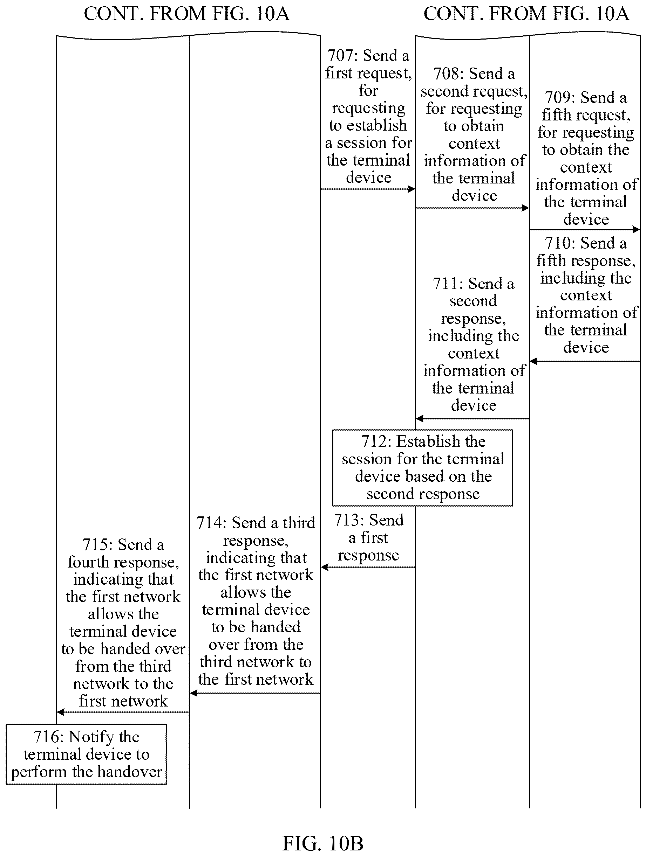

Data forwarding tunnels corresponding to the sessions may be established for the terminal device in the first network, the second network, and the third network with reference to the following method shown in FIG. 8, service data of the terminal device may be forwarded through the established data forwarding tunnels with reference to the following method shown in FIG. 9, and with reference to the following method shown in FIG. 10A and FIG. 10B, the terminal device is notified that the terminal device is allowed to be handed over from the third network to the first network, so that the terminal device can be handed over from the source access network device to the target access network device, to implement the network handover.

Based on the method shown in FIG. 7A and FIG. 7B, the home network (namely, the second network) of the terminal device may assist the terminal device in performing the handover between different visited networks participating in network sharing (for example, in handing over from the third network to the first network). To be specific, when the terminal device is handed over between the different visited networks participating in the network sharing, the mobility management network element of the home network may transfer the context information of the terminal device between the mobility management network elements of the different visited networks (that is, the second mobility management network element assists the first mobility management network element in obtaining the context information that is of the terminal device and that is stored in the third mobility management network element), and the session management network element of the home network transfers the context information of the terminal device between the session management network elements of different visited networks (that is, the second session management network element assists the first session management network element in obtaining the context information that is of the terminal device and that is stored in the third session management network element), and assists the session management network elements of the different visited networks in establishing the data forwarding tunnels, to implement the handover of the terminal device between the different visited networks (that is, to implement the handover of the terminal device between the third network and the first network), and ensure service continuity of the terminal device in a handover process, thereby improving communication performance.

Compared with the network handover based on the inter-network roaming shown in FIG. 3, the network handover based on the inter-network roaming shown in FIG. 3 supports only the handover between the visited network and the home network participating in the network sharing. In this embodiment of this application, when the terminal device is handed over between different visited networks participating in the network sharing, direct communication cannot be performed between the different visited networks, for example, handover signaling between the mobility management network element of the first network and the mobility management network element of the third network cannot be directly transmitted, the session management network element of the first network cannot directly obtain the context information that is of the terminal device and that is stored in the session management network element of the third network, but indirect information forwarding and data obtaining and forwarding are performed between the mobility management network element and the session management network element of the home network. Therefore, the mobility management network element of the third network needs to notify, during the handover, the mobility management network element of the first network that the session management network element of the first network can be assisted in obtaining the identifier information of the session management network element of the home network of the context information of the terminal device. In this way, the terminal device is handed over between different visited networks, and service continuity of the terminal device in the handover process is ensured, thereby improving communication performance.

FIG. 8 is a flowchart of a process of establishing data forwarding tunnels according to an embodiment of this application. As shown in FIG. 8, the method may include the following steps.

Step 801: A third session management network element sends second tunnel information and third tunnel information to a second session management network element, and correspondingly, the second session management network element receives the second tunnel information and the third tunnel information from the third session management network element.

The second tunnel information may be used to establish an uplink data forwarding tunnel between a source access network device of a third network and a third user plane network element of the third network, and the third tunnel information may be used to establish a downlink data forwarding tunnel between a second user plane network element of a second network and the third user plane network element.

The third user plane network element may be one or more of one or more user plane network elements in the third network that correspond to a session established by the third network for a terminal device. The second user plane network element may be one or more of one or more user plane network elements in the second network that correspond to a session established by the second network for the terminal device.

Optionally, the third session management network element may include the second tunnel information and the third tunnel information in a fifth response, and send the fifth response to the second session management network element.

Optionally, the third session management network element may send a session establishment request to the third user plane network element. The third user plane network element may allocate the second tunnel information and the third tunnel information based on the session establishment request, and send the second tunnel information and the third tunnel information to the third session management network element. When receiving the second tunnel information and the third tunnel information, the third session management network element may include the second tunnel information and the third tunnel information in the fifth response, and send the fifth response to the second session management network element.

Step 802: The second session management network element sends the third tunnel information to the second user plane network element, and correspondingly, the second user plane network element receives the third tunnel information from the second session management network element.

Step 803: The second session management network element sends second tunnel information to a first session management network element, and correspondingly, the first session management network element receives the second tunnel information from the second session management network element.

Optionally, the second session management network element may include the second tunnel information in a second response, and send the second response to the first session management network element.

Step 804: The second session management network element sends fourth tunnel information to the third session management network element, and correspondingly, the third session management network element receives the fourth tunnel information from the second session management network element.

The fourth tunnel information may be used to establish an uplink data forwarding tunnel between the second user plane network element and the third user plane network element.

Optionally, the second session management network element may send a session establishment request to the second user plane network element. The second user plane network element may allocate the first tunnel information and the fourth tunnel information based on the session establishment request, and send the first tunnel information and the fourth tunnel information to the second session management network element. When receiving the first tunnel information and the fourth tunnel information, the second session management network element may perform step 804, to send the fourth tunnel information to the third session management network element, and may further perform the following step 806, to send the first tunnel information to the first session management network element.

The first tunnel information may be used to establish a data forwarding tunnel between a first user plane network element of a first network and the second user plane network element.

The first user plane network element may be one or more user plane network elements in the first network that correspond to a session established by the first network for the terminal device.

Step 805: The third session management network element sends the fourth tunnel information to the third user plane network element, and correspondingly, the third user plane network element receives the fourth tunnel information from the third session management network element.

Step 806: The second session management network element sends the first tunnel information to the first session management network element, and correspondingly, the first session management network element receives the first tunnel information from the second session management network element.

The second session management network element may include the first tunnel information in a second response, and send the second response to the first session management network element.

Step 807: The first session management network element sends the first tunnel information to the first user plane network element.

Step 808: The first session management network element sends fifth tunnel information to the second session management network element, and correspondingly, the second session management network element receives the fifth tunnel information from the first session management network element.

The fifth tunnel information may be used to establish an uplink data forwarding tunnel between the first user plane network element and the second user plane network element.

Optionally, the first session management network element may send a session establishment request to the first user plane network element. The first user plane network element may allocate the fifth tunnel information based on the session establishment request, and send the fifth tunnel information to the first session management network element. When receiving the fifth tunnel information, the first session management network element may send the fifth tunnel information to the second session management network element.

Step 809: The second session management network element sends the fifth tunnel information to the second user plane network element, and correspondingly, the second user plane network element receives the fifth tunnel information from the second session management network element.

Step 810: The first session management network element sends the second tunnel information to a first mobility management network element, and correspondingly, the first mobility management network element receives the second tunnel information from the first session management network element.

Optionally, the first session management network element may include the second tunnel information in a first response, and send the first response to the first mobility management network element.

Step 811: The first mobility management network element sends the second tunnel information to a second mobility management network element, and correspondingly, the second mobility management network element receives the second tunnel information from the first mobility management network element.

Optionally, the first mobility management network element may include the second tunnel information in a third response, and send the third response to the second mobility management network element.

The third response may indicate that the first network allows the terminal device to be handed over from the third network to the first network.

Step 812: The second mobility management network element sends the second tunnel information to a third mobility management network element, and correspondingly, the third mobility management network element receives the second tunnel information from the second mobility management network element.

The second mobility management network element may include the second tunnel information in a fourth response, and send the fourth response to the third mobility management network element.

The fourth response may indicate that the first network allows the terminal device to be handed over from the third network to the first network.

Step 813: The third mobility management network element sends the second tunnel information to the source access network device, and correspondingly, the source access network device receives the second tunnel information from the third mobility management network element.

Based on the method shown in FIG. 8, the data forwarding tunnel between the source access network device and the third user plane network element and the data forwarding tunnel between the second user plane network element and the first user plane network element may be established, so that the source access network device subsequently sends service data of the terminal device to the first user plane network element via the third user plane network element and the second user plane network element, to ensure service continuity of the terminal device in a handover process.

FIG. 9 is a diagram of forwarding service data of a terminal device according to an embodiment of this application. As shown in FIG. 9, the method may include the following steps.

Step 901: A source access network device sends the service data of the terminal device to a third user plane network element, and correspondingly, the third user plane network element receives the service data of the terminal device from the source access network device.

The source access network device may send the service data of the terminal device to the third user plane network element based on second tunnel information.

Step 902: The third user plane network element sends the service data of the terminal device to a second user plane network element, and correspondingly, the second user plane network element receives the service data of the terminal device from the third user plane network element.

The third user plane network element may determine the second user plane network element based on the service data of the terminal device, and then send the service data of the terminal device to the second user plane network element.

The third user plane network element may send the service data of the terminal device to the second user plane network element based on fourth tunnel information.

Step 903: The second user plane network element sends the service data of the terminal device to a first user plane network element, and correspondingly, the first user plane network element receives the service data of the terminal device from the second user plane network element.

The second user plane network element may determine the first user plane network element based on the service data of the terminal device, and then send the service data of the terminal device to the first user plane network element.

The second user plane network element may send the service data of the terminal device to the first user plane network element based on fifth tunnel information.

Based on the method shown in FIG. 9, the service data of the terminal device may be forwarded between the source access network device and the user plane network elements of the networks based on the tunnel information allocated in FIG. 8, to ensure service continuity of the terminal device in a handover process, and improve communication performance.

Based on the method shown in FIG. 7A and FIG. 7B, with reference to the following method shown in FIG. 10A and FIG. 10B, the terminal device may be further notified that the terminal device is allowed to be handed over from the third network to the first network in the first network, the second network, and the third network.

FIG. 10A and FIG. 10B are a flowchart of a network handover method according to an embodiment of this application. As shown in FIG. 10A and FIG. 10B, the method may include the following steps.

Step 713: The first session management network element sends a first response to the first mobility management network element, and correspondingly, the first mobility management network element receives the first response from the first session management network element.

The first response may be a session establishment response.

Step 714: The first mobility management network element sends a third response to the second mobility management network element, and correspondingly, the second mobility management network element receives the third response from the first mobility management network element.

The third response may indicate that the first network allows the terminal device to be handed over from the third network to the first network.

Optionally, the third response may include the identifier information of the first mobility management network element.

Step 715: The second mobility management network element sends a fourth response to the third mobility management network element, and correspondingly, the third mobility management network element receives the fourth response from the second mobility management network element.

The fourth response may indicate that the first network allows the terminal device to be handed over from the third network to the first network.

Optionally, the fourth response may include the identifier information of the first mobility management network element.

Step 716: The third mobility management network element notifies the terminal device to perform the handover, and correspondingly, the terminal device is handed over from the source access network device to the target access network device.

Based on the method shown in FIG. 10A and FIG. 10B, the terminal device may be handed over from the source access network device to the target access network device when the session establishment is completed in the first network, the second network, and the third network, to implement the handover of the terminal device between the third network and the first network.

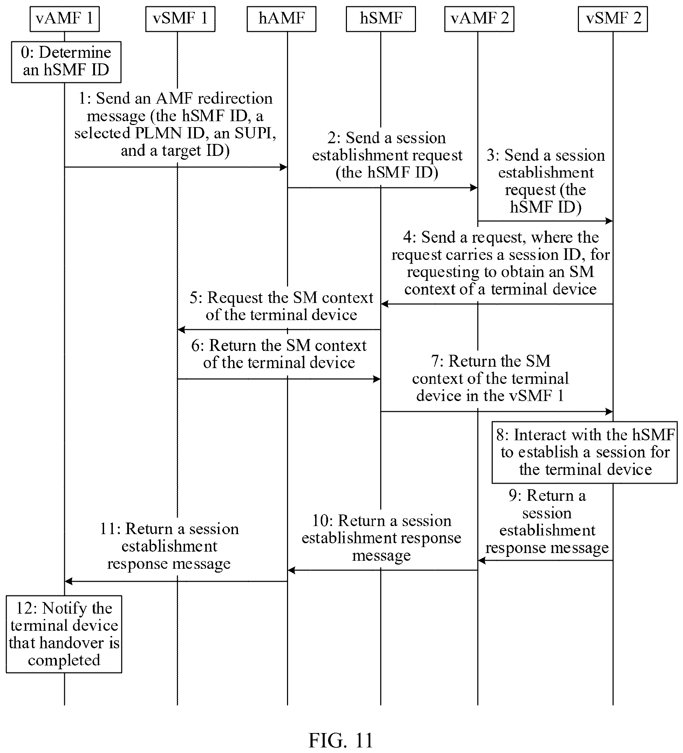

Based on the methods shown in FIG. 7A and FIG. 7B to FIG. 10A and FIG. 10B, refer to the following FIG. 11. The foregoing network handover process in which the terminal device is handed over from the source access network device to the target access network device is described by using an example in which the third mobility management network element is a vAMF 1, the third session management network element is a vSMF 1, the second mobility management network element is an hAMF, the second session management network element is an hSMF, the first mobility management network element is a vAMF 2, and the first session management network element is a vSMF 2.

FIG. 11 is a flowchart of a network handover method according to an embodiment of this application. As shown in FIG. 11, the method may include the following steps.

Step 0: The vAMF 1 determines identifier information (hSMF ID) of the hSMF.

In a first possible design, the vAMF 1 may store the hSMF ID in a process in which a third network establishes a session for the terminal device.

In a second possible design, the vAMF 1 does not store the hSMF ID in a process in which a third network establishes a session for the terminal device, and the vAMF 1 may send a request to the vSMF 1 (where the request carries a session ID that needs to be handed over, namely, identifier information of the session of the terminal device). The vSMF 1 obtains the corresponding hSMF ID based on the session ID, and returns the hSMF ID to vAMF 1.

In a third possible design, the vAMF 1 requests, from a vUDM (namely, a third unified data management network element)/an hUDM (namely, a second unified data management network element), the hSMF ID corresponding to a session of a terminal device.

Step 1: The vAMF 1 sends an AMF redirection message to the hAMF.

The AMF redirection message may include the hSMF ID, a selected PLMN ID allocated by a first network to the terminal device, an SUPI of the terminal device, and global identifier information (a target ID) of a target RAN.

Optionally, the AMF redirection message may further include UE context information (UE context information) prepared for handover in the vAMF 1.

Step 2: The hAMF determines, based on the selected PLMN ID, the SUPI, and a PLMN ID in the target ID that are in the AMF redirection message received from the vAMF 1, that the terminal device is an inter-network roaming subscriber, and the terminal device is performing direct handover of shared RANs between different operators (in other words, being handed over from a shared RAN in a visited network to a shared RAN in another visited network). If determining, based on a configuration of the hAMF, that the hAMF supports the handover operation of the terminal device, the hAMF may send a session establishment request to the vAMF 2, to forward, to the vAMF 2, the information received from the vAMF 1.

In a first possible design, vAMF IDs corresponding to PLMNs of different operators are preconfigured on the hAMF. The hAMF may determine the vAMF 2 by querying the configuration based on the PLMN ID in the target ID.

In a second possible design, the hAMF obtains, based on the target ID through a service discovery process of an hNRF (namely, a topology management network element of a second network) and a vNRF (namely, a topology management network element of the first network), the vAMF 2 corresponding to the target ID.

Step 3: The vAMF 2 selects the vSMF 2 based on the message received from the hAMF, and sends a PDU session establishment request to the vSMF 2.

The session establishment request may include the hSMF ID and the UE context information.

Step 4: The vSMF 2 sends a request to an hSMF based on the hSMF ID obtained from the session establishment request, where the request carries a session ID (for example, a PDU session ID), for requesting to obtain an SM context of the terminal device.

Step 5: The hSMF requests the SM context of the terminal device from the vSMF 1 based on the received session ID.

Step 6: The vSMF 1 returns the SM context of the terminal device to the hSMF.

Step 7: The hSMF returns the SM context of the terminal device in the vSMF 1 to the vSMF 2.

Step 8: The vSMF 2 interacts with the hSMF to establish a session for the terminal device.

The vSMF 2 may select a vUPF 2, send tunnel information of the vUPF 2 to the hSMF, and obtain tunnel information of an hUPF via the hSMF.

Step 9: The vSMF 2 returns a session establishment response message to the vAMF 2.

Step 10: The vAMF 2 sends a session establishment response message to the hAMF, to notify the hAMF that the session establishment on a VPLMN 2 side is completed.

The session establishment response message may carry an N2 notify uniform resource identifier (N2 Notify URI), for example, a vAMF 2 ID.

Step 11: The hAMF sends a session establishment response message to the vAMF 1.

The session establishment response message may carry the N2 Notify URI, for example, the vAMF 2 ID.

Step 12: The vAMF 1 notifies the terminal device that the handover is completed.

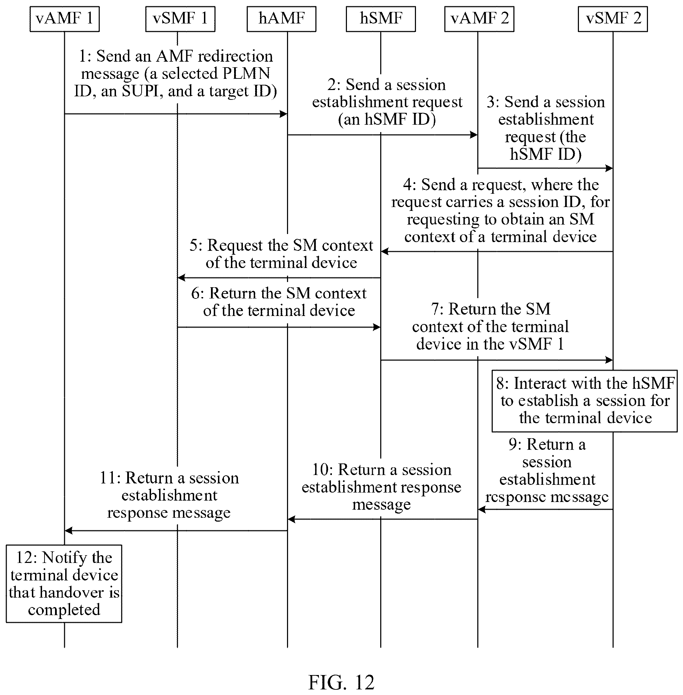

Different from that the vAMF 1 determines the hSMF ID in FIG. 11, with reference to FIG. 12, the hAMF may alternatively determine the hSMF ID. That is, step 0 to step 2 in FIG. 11 may be replaced with step 1 and step 2 in FIG. 12.

FIG. 12 is a flowchart of a network handover method according to an embodiment of this application. As shown in FIG. 12, the method may include the following steps.

Step 1: A vAMF 1 sends an AMF redirection message to an hAMF.

The AMF redirection message may include a selected PLMN ID allocated by a first network to a terminal device, an SUPI of the terminal device, and a target ID.

Optionally, the AMF redirection message may further include UE context information prepared for handover in the vAMF 1.

Step 2: The hAMF determines, based on the selected PLMN ID, the SUPI, and PLMN ID information in the target ID that are in the AMF redirection message received from the vAMF 1, that the terminal device is an inter-network roaming subscriber, and the terminal device is performing direct handover of shared RANs between different operators (in other words, being handed over from a shared RAN in a visited network to a shared RAN in another visited network). If determining, based on a configuration of the hAMF, that the hAMF supports the handover operation of the terminal device, the hAMF may select an appropriate vAMF 2, determine an hSMF ID that is being used by the terminal device, and send an AMF redirection message to the vAMF 2.

The AMF redirection message may include the hSMF ID and an N2 Notify URI (for example, a vAMF 2 ID), and the hSMF ID is used to obtain an SM context of the terminal device in a vSMF 1.

In a first possible design, when storing the context information of the terminal device, and establishing a session for the terminal device, the hAMF stores corresponding hSMF ID information.

In a second possible implementation, when the hAMF does not store the context information of the terminal device, the hAMF may request, from the vSMF 1, hSMF ID information corresponding to a session ID (for example, a PDU session ID), or the hAMF may request, from an hUDM (namely, a second unified data management network element), the hSMF ID information corresponding to the session ID.

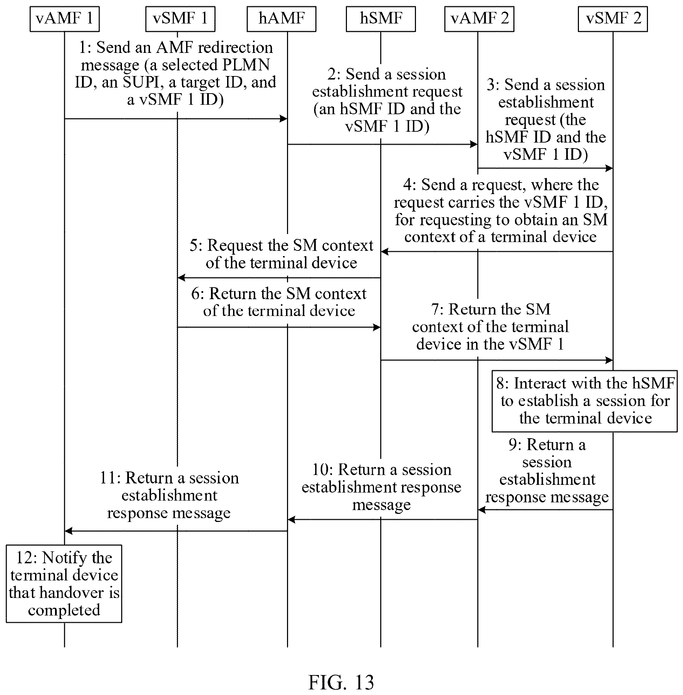

Different from that the hAMF determines the hSMF ID based on the session ID in FIG. 12, with reference to the following FIG. 13, the hAMF may alternatively randomly determine the hSMF ID. That is, step 1 to step 7 in FIG. 12 may be replaced with step 1 to step 7 in FIG. 13.

FIG. 13 is a flowchart of a network handover method according to an embodiment of this application. As shown in FIG. 13, the method may include the following steps.

Step 1: A vAMF1 sends an AMF redirection message to an hAMF.

The AMF redirection message may include a selected PLMN ID allocated by a first network to a terminal device, an SUPI of the terminal device, a target ID, and a vSMF 1 ID.

Optionally, the AMF redirection message may further include UE context information prepared for handover in the vAMF 1.

Step 2: The hAMF determines, based on the selected PLMN ID, the SUPI, and PLMN ID information in the target ID that are in the AMF redirection message received from the vAMF 1, that the terminal device is an inter-network roaming subscriber, and the terminal device is performing direct handover of shared RANs between different operators (in other words, being handed over from a shared RAN in a visited network to a shared RAN in another visited network). If determining, based on a configuration of the hAMF, that the hAMF supports the handover operation of the terminal device, the hAMF may select an appropriate vAMF 2, randomly determine an hSMF ID, and send an AMF redirection message to the vAMF 2.

The hAMF may randomly determine the hSMF ID based on the default configuration. The hSMF ID may be an hSMF ID unrelated to a session in a VPLMN 1, or may be an hSMF ID corresponding to a session in the VPLMN 1. This is not limited. That is, a type of the hSMF ID may be default (default).

The AMF redirection message may include the hSMF ID, the vSMF 1 ID, and an N2 Notify URI (for example, a vAMF 2 ID), and the hSMF ID is used by a vSMF 2 to obtain an SM context of the terminal device from a vSMF 1.

Optionally, the AMF redirection message may further include the UE context information.

Step 3: The vAMF 2 selects the vSMF 2 based on the message received from the hAMF, and sends a PDU session establishment request to the vSMF 2.

The session establishment request may include the hSMF ID and the vSMF 1 ID.

Step 4: The vSMF 2 sends a request to an hSMF based on the hSMF ID obtained from the session establishment request and the determined type of the hSMF ID, where the request carries the vSMF 1 ID, for requesting to obtain the SM context of the terminal device.

Step 5: The hSMF requests the SM context of the terminal device from the vSMF 1 based on the received vSMF 1 ID.

Step 6: The vSMF 1 returns the SM context of the terminal device to the hSMF.

Step 7: The hSMF returns the SM context of the terminal device in the vSMF 1 to the vSMF 2.

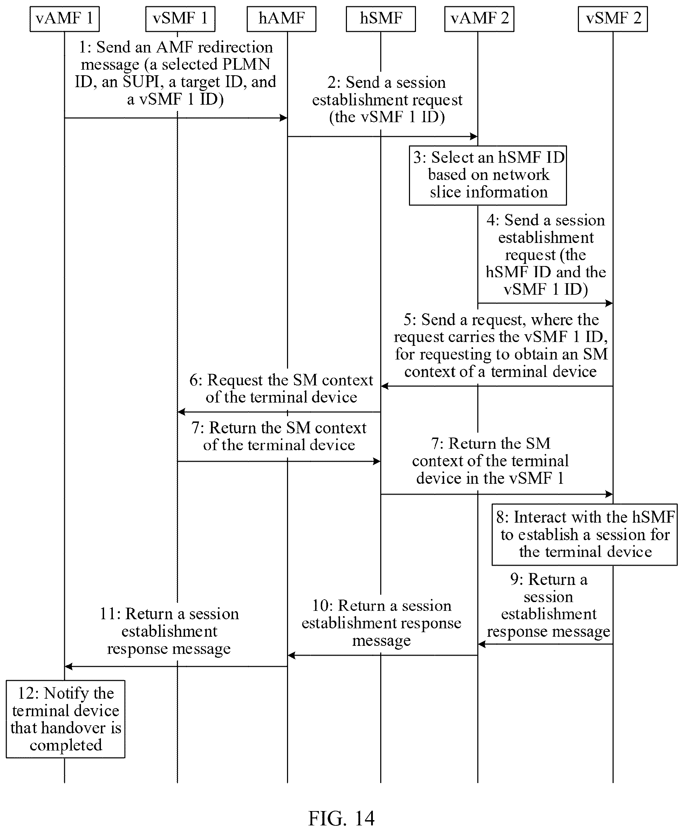

Different from that the vAMF 1 or the hAMF determines the hSMF ID in FIG. 11 to FIG. 13, with reference to the following FIG. 14, the vAMF 2 may alternatively determine the hSMF ID. That is, step 0 to step 7 in FIG. 11 may be replaced with step 1 to step 7 in FIG. 14.

FIG. 14 is a flowchart of a network handover method according to an embodiment of this application. As shown in FIG. 14, the method may include the following steps.

Step 1: A vAMF sends an AMF redirection message to an hAMF.

The AMF redirection message may include a selected PLMN ID allocated by a first network to a terminal device, an SUPI of the terminal device, a target ID, and a vSMF 1 ID.

Optionally, the AMF redirection message may further include UE context information prepared for handover in the vAMF 1.

Step 2: The hAMF determines, based on the selected PLMN ID, the SUPI, and PLMN ID information in the target ID that are in the AMF redirection message received from the vAMF 1, that the terminal device is an inter-network roaming subscriber, and the terminal device is performing direct handover of shared RANs between different operators (in other words, being handed over from a shared RAN in a visited network to a shared RAN in another visited network). If determining, based on a configuration of the hAMF, that the hAMF supports the handover operation of the terminal device, the hAMF may select an appropriate vAMF 2, and send an AMF redirection message to the vAMF 2.

The AMF redirection message may include the vSMF 1 ID and an N2 Notify URI (for example, a vAMF 2 ID).

Optionally, the AMF redirection message may further include the UE context information.

Step 3: The vAMF 2 selects an hSMF ID based on the message received from the hAMF and network slice information (for example, slice information of home S-NSSAI).

The vAMF 2 may select, based on the slice information of the home S-NSSAI through a service discovery process of a vNRF and an hNRF, the hSMF ID corresponding to the slice information of the home S-NSSAI; or the hSMF ID corresponding to a home PLMN of the terminal device is preconfigured on the vAMF 2; or the vAMF 2 may randomly determine the hSMF ID based on a default configuration of the vAMF 2.

Step 4: The vAMF 2 selects a vSMF 2 based on the message received from the hAMF, and sends a PDU session establishment request to the vSMF 2.

The session establishment request may include the hSMF ID and the vSMF 1 ID.

Step 5: The vSMF 2 sends a request to the hSMF ID based on the hSMF ID obtained from the session establishment request, where the request carries the vSMF 1 ID, for requesting to obtain an SM context of the terminal device.

Step 6: The hSMF requests the SM context of the terminal device from the vSMF 1 based on the received vSMF 1 ID.

Step 7: The vSMF 1 returns the SM context of the terminal device to the hSMF, and the hSMF returns the SM context of the terminal device in the vSMF 1 to the vSMF 2.

It should be noted that embodiments of this application may be implemented separately, or may be implemented in combination. This is not limited. Unless otherwise stated or there is a logic conflict, terms and/or descriptions in different embodiments provided by this application are consistent and may be mutually referenced, and technical features in different embodiments may be combined into a new embodiment based on an internal logical relationship thereof.

It may be understood that in embodiments of this application, an execution body may perform some or all of the steps in embodiments of this application. The steps or operations are merely examples. In embodiments of this application, other operations or variations of various operations may be further included. In addition, the steps may be performed in a sequence different from that presented in embodiments of this application, and not all the operations in embodiments of this application may be necessarily performed.

The foregoing mainly describes, from a perspective of interaction between devices, the solutions provided in embodiments of this application. It may be understood that, to implement the foregoing functions, each device includes a corresponding hardware structure and/or a corresponding software module for performing each function. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the devices may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, the division into the modules is an example, and is merely logical function division. During actual implementation, another division manner may be used.

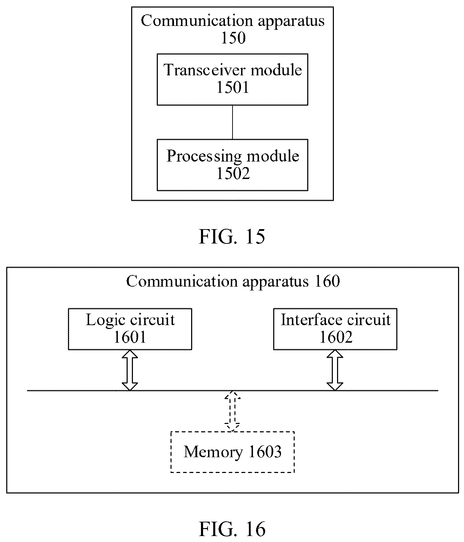

When each functional module is obtained through division based on each corresponding function, FIG. 15 shows a communication apparatus 150. The communication apparatus 150 may perform actions performed by the terminal device, the access network device, or the core network device in the methods shown in FIG. 7A and FIG. 7B to FIG. 14. All related content of the steps in the foregoing method embodiments may be cited in function descriptions of the corresponding functional modules. For technical effects that can be achieved by the communication apparatus, refer to the foregoing method embodiments. Details are not described herein again.

The communication apparatus 150 may include a transceiver module 1501 and a processing module 1502. For example, the communication apparatus 150 may be a communication device, may be a chip used in the communication device, or another combined device or component that has a function of the foregoing communication apparatus. When the communication apparatus 150 is a communication device, the transceiver module 1501 may be a transceiver, and the transceiver may include an antenna, a radio frequency circuit, and the like. The processing module 1502 may be a processor (or a processing circuit), for example, a baseband processor. The baseband processor may include one or more CPUs. When the communication apparatus 150 is a component having a function of the communication apparatus, the transceiver module 1501 may be a radio frequency unit; and the processing module 1502 may be a processor (or a processing circuit), for example, a baseband processor. When the communication apparatus 150 is a chip system, the transceiver module 1501 may be an input/output interface of a chip (for example, a baseband chip); and the processing module 1502 may be a processor (or a processing circuit) of the chip system, and may include one or more central processing units. It should be understood that the transceiver module 1501 in this embodiment of this application may be implemented by a transceiver or a transceiver-related circuit component; and the processing module 1502 may be implemented by a processor or a processor-related circuit component (or referred to as a processing circuit).

The transceiver module 1501 may be configured to perform all receiving and sending operations performed by the communication apparatus in embodiments shown in FIG. 7A and FIG. 7B to FIG. 14, and/or is configured to support another process in the technology described in this specification. The processing module 1502 may be configured to perform all operations, other than the receiving and sending operations, performed by the communication apparatus in embodiments shown in FIG. 7A and FIG. 7B to FIG. 14, and/or is configured to support another process of the technology described in this specification.

In an example, when the communication apparatus 150 is configured to perform actions performed by a first session management network element, the transceiver module 1501 is configured to receive a first request from a first mobility management network element of the first network, where the first request is for requesting to establish a session for a terminal device, the first request includes identifier information of a second session management network element of a second network, and the second network is a home network of the terminal device; and the transceiver module 1501 is further configured to: send a second request to the second session management network element, and receive a second response from the second session management network element. The processing module 1502 is configured to establish the session for the terminal device based on the second response. The second request is for requesting to obtain context information of the terminal device, the second response includes the context information that is of the terminal device and that is stored in a third session management network element, and the third session management network element is a network element that establishes a session for the terminal device in the third network.

In another example, when the communication apparatus 150 is configured to perform actions performed by a first mobility management network element, the transceiver module 1501 is configured to receive a third request from a second mobility management network element of a second network, where the third request is for requesting to hand over a terminal device from a third network to a first network, and the second network is a home network of the terminal device; the processing module 1502 is configured to obtain identifier information of a second session management network element of the second network; and the transceiver module 1501 is further configured to send a first request to a first session management network element of the first network, where the first request is for requesting to establish a session for the terminal device, and the first request includes the identifier information of the second session management network element.

In another example, when the communication apparatus 150 is configured to perform actions performed by a second mobility management network element, the transceiver module 1501 is configured to receive a fourth request from a third mobility management network element of a third network, where the fourth request is for requesting to hand over a terminal device from the third network to a first network, and the second network is a home network of the terminal device; the processing module 1502 is configured to obtain identifier information of a second session management network element of the second network; and the transceiver module 1501 is further configured to send a third request to a first mobility management network element of the first network, where the third request is for requesting to hand over the terminal device from the third network to the first network, and the third request includes the identifier information of the second session management network element.

In another example, when the communication apparatus 150 is configured to perform actions performed by a second session management network element, the transceiver module 1501 is configured to receive a second request from a first session management network element of a first network, where the second request is for requesting to obtain context information of a terminal device, and a second network is a home network of the terminal device; the transceiver module 1501 is further configured to send a fifth request to a third session management network element of a third network, where the third session management network element is a network element that establishes a session for the terminal device in the third network, and the fifth request is for requesting to obtain context information of the terminal device; and the transceiver module 1501 is further configured to receive a fifth response from the third session management network element, where the fifth response includes the context information that is of the terminal device and that is stored in the third session management network element. The transceiver module 1501 is further configured to send a second response to the first session management network element, where the second response includes the context information that is of the terminal device and that is stored in the third session management network element.

In another example, when the communication apparatus 150 is configured to perform actions performed by a third mobility management network element, the transceiver module 1501 is configured to receive a handover request from a terminal device, where the handover request includes global identifier information of a target access network device, and the handover request is for requesting to hand over to the target access network device; the processing module 1502 is configured to obtain identifier information of a second session management network element of a second network based on the handover request, where the second network is a home network of the terminal device; and the transceiver module 1501 is further configured to send a fourth request to a second mobility management network element of the second network, where the fourth request is for requesting to hand over the terminal device from a third network to a first network, and the fourth request includes the identifier information of the second session management network element.

In another example, when the communication apparatus 150 is configured to perform actions performed by a second user plane network element, the transceiver module 1501 is configured to receive service data of a terminal device from a third user plane network element of a third network, where a second network is a home network of the terminal device; and the transceiver module 1501 is further configured to send the service data of the terminal device to a first user plane network element of a first network.

In a possible implementation, the transceiver module 1501 in FIG. 15 may be replaced with a transceiver, where a function of the transceiver module 1501 may be integrated into the transceiver; and the processing module 1502 may be replaced with a processor, where a function of the processing module 1502 may be integrated into the processor. Further, the communication apparatus 150 shown in FIG. 15 may further include a memory.

Alternatively, when the processing module 1502 is replaced with a processor, and the transceiver module 1501 is replaced with a transceiver, the communication apparatus 150 in this embodiment of this application may be a communication apparatus 160 shown in FIG. 16. The processor may be a logic circuit 1601, and the transceiver may be an interface circuit 1602. Further, the communication apparatus 160 shown in FIG. 16 may further include a memory 1603.

An embodiment of this application further provides a computer program product. When the computer program product is executed by a computer, a function in any one of the foregoing method embodiments may be implemented.

An embodiment of this application further provides a computer program. When the computer program is executed by a computer, a function in any one of the foregoing method embodiments may be implemented.

An embodiment of this application further provides a computer-readable storage medium. All or some of procedures in the foregoing method embodiments may be implemented by a computer program instructing related hardware. The program may be stored in the computer-readable storage medium. When the program is executed, the procedures in the foregoing method embodiments may be included. The computer-readable storage medium may be an internal storage unit in the terminal in any one of the foregoing embodiments (including a data transmit end and/or a data receive end), for example, a hard disk or a memory of the terminal. The computer-readable storage medium may alternatively be an external storage device of the foregoing terminal, for example, a plug-in hard disk, a smart media card (smart media card, SMC), a secure digital (secure digital, SD) card, and a flash card (flash card) that are configured on the foregoing terminal. Further, the computer-readable storage medium may further include both the internal storage unit and the external storage device of the foregoing terminal. The computer-readable storage medium is configured to store the computer program and other programs and data needed by the foregoing terminal. The computer-readable storage medium may be further configured to temporarily store data that has been output or is to be output.

It should be noted that in the specification, claims, and accompanying drawings of this application, the terms "first", "second", and the like are intended to distinguish between different objects, but are not intended to describe a particular sequence. The terms "first" and "second" are intended only for description, and shall not be understood as an indication or implication of relative importance or an implicit indication of a quantity of indicated technical features. Therefore, a feature limited by "first" or "second" may explicitly or implicitly include one or more features. In the descriptions of embodiments, unless otherwise specified, "a plurality of" means two or more.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one (item)" means one or more. "A plurality of" means two or more than two. "At least two (items) "means two, three, or more than three. "And/or" is used to describe an association relationship between associated objects, and indicates that three relationships may exist. For example, "A and/or B" may indicate three cases: Only A exists, only B exists, and both A and B exist, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural. Both "when ..." and " if" mean that corresponding processing is performed in an objective case, are not intended to limit time, do not require a determining action during implementation, and do not mean that there is another limitation.

In embodiments of this application, the word such as "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

In this application, "sending information to... (the terminal device)" may be understood as that a destination end of the information is the terminal device, and may include directly or indirectly sending the information to the terminal device. "Receiving information from... (the terminal device)" may be understood as that a source end of the information is the terminal device, and may include directly or indirectly receiving the information from the terminal device. Information may undergo necessary processing, for example, a format change, between the source end for sending the information and the destination end. However, the destination end may understand valid information from the source end.

Based on the foregoing descriptions of the implementations, a person skilled in the art may clearly understand that for the purpose of convenient and brief descriptions, division into the foregoing functional modules is merely used as an example for descriptions. During actual application, the foregoing functions can be allocated to different functional modules for completion based on a requirement, in other words, an inner structure of an apparatus is divided into different functional modules to complete all or some of the functions described above.

In several embodiments provided in this application, it should be understood that the disclosed apparatuses and methods may be implemented in other manners. For example, the described apparatus embodiments are merely examples. For example, the division into the modules or the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may be one or more physical units, may be located in one place, or may be distributed on different places. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such understanding, the technical solutions of this application essentially or all or some of the technical solutions may be implemented in a form of a software product. The software product is stored in a storage medium and includes several instructions for instructing a device (which may be a single-chip microcomputer, a chip or the like) or a processor (processor) to perform all or some of the steps in the methods described in embodiments of this application. The foregoing storage medium includes any medium that can store program code, such as a USB flash drive, a removable hard disk, a ROM, a RAM, a magnetic disk, or an optical disc.

## Claims

1. A network handover method, wherein the method is applied to a first session management network element of a first network, and the method comprises:
receiving a first request from a first mobility management network element of the first network, wherein the first request is for requesting to establish a session for a terminal device, the first request comprises identifier information of a second session management network element of a second network, and the second network is a home network of the terminal device;
sending a second request to the second session management network element, wherein the second request is for requesting to obtain context information of the terminal device;
receiving a second response from the second session management network element, wherein the second response comprises the context information that is of the terminal device and that is stored in a third session management network element, and the third session management network element is a network element that establishes a session for the terminal device in a third network; and
establishing the session for the terminal device based on the second response.

2. The method according to claim 1, wherein
the first request further comprises one or more of the following: identifier information of the session established by the third network for the terminal device and identifier information of the third session management network element.

3. The method according to claim 2, wherein
the second request comprises one or more of the following: the identifier information of the session established by the third network for the terminal device and the identifier information of the third session management network element.

4. The method according to any one of claims 1 to 3, wherein the establishing the session for the terminal device based on the second response comprises:
obtaining first tunnel information and second tunnel information, wherein the second response comprises the first tunnel information and the second tunnel information, and the first tunnel information is used to establish a data forwarding tunnel between a first user plane network element of the first network and a second user plane network element of the second network;
sending the first tunnel information to the first user plane network element; and
sending a first response to the first mobility management network element, wherein the first response comprises the second tunnel information.

5. The method according to claim 4, wherein
the second tunnel information is used to establish an uplink data forwarding tunnel between a source access network device of the third network and a third user plane network element of the third network.

6. A network handover method, wherein the method is applied to a first mobility management network element of a first network, and the method comprises:
receiving a third request from a second mobility management network element of a second network, wherein the third request is for requesting to hand over a terminal device from a third network to the first network, and the second network is a home network of the terminal device;
obtaining identifier information of a second session management network element of the second network; and
sending a first request to a first session management network element of the first network, wherein the first request is for requesting to establish a session for the terminal device, and the first request comprises the identifier information of the second session management network element.

7. The method according to claim 6, wherein the obtaining the identifier information of the second session management network element of the second network comprises:
determining the identifier information of the second session management network element based on the third request, wherein the third request comprises the identifier information of the second session management network element; or
if the third request comprises network slice information, determining the identifier information of the second session management network element based on the network slice information; or
randomly determining the identifier information of the second session management network element based on a preset configuration.

8. The method according to claim 6 or 7, wherein
the third request comprises global identifier information of a target access network device, and before the sending the first request to the first session management network element of the first network, the method further comprises: determining the first session management network element based on the global identifier information of the target access network device; or
the third request comprises the network slice information, and before the sending the first request to the first session management network element of the first network, the method further comprises: determining the first session management network element based on the network slice information.

9. The method according to any one of claims 6 to 8, wherein
the third request further comprises one or more of the following: identifier information of a session established by the third network for the terminal device and identifier information of a third session management network element of the third network.

10. The method according to claim 9, wherein
the first request further comprises one or more of the following: the identifier information of the session established by the third network for the terminal device and the identifier information of the third session management network element of the third network.

11. The method according to any one of claims 6 to 10, wherein the method further comprises:
receiving a first response from the first session management network element, wherein the first response comprises second tunnel information; and
sending a third response to the second mobility management network element, wherein the third response indicates that the first network allows the terminal device to be handed over from the third network to the first network, and the third response comprises identifier information of the first mobility management network element and the second tunnel information.

12. The method according to claim 11, wherein
the second tunnel information is used to establish an uplink data forwarding tunnel between a source access network device of the third network and a third user plane network element of the third network.

13. A network handover method, wherein the method is applied to a second mobility management network element of a second network, the second network is a home network of a terminal device, and the method comprises:
receiving a fourth request from a third mobility management network element of a third network, wherein the fourth request is for requesting to hand over the terminal device from the third network to a first network;
obtaining identifier information of a second session management network element of the second network; and
sending a third request to a first mobility management network element of the first network, wherein the third request is for requesting to hand over the terminal device from the third network to the first network, and the third request comprises the identifier information of the second session management network element.

14. The method according to claim 13, wherein the obtaining the identifier information of the second session management network element of the second network comprises:
determining the identifier information of the second session management network element based on the fourth request, wherein the fourth request comprises the identifier information of the second session management network element; or
if the fourth request comprises identifier information of a session established by the third network for the terminal device, determining the identifier information of the second session management network element from a prestored association relationship between identifier information of a session and identifier information of a second session management network element based on the identifier information of the session; or
sending, to a third session management network element of the third network, identifier information of a session established by the third network for the terminal device, and receiving, from the third session management network element, the identifier information that is of the second session management network element and that corresponds to the session; or
sending, to a second unified data management network element of the second network, identifier information of a session established by the third network for the terminal device, and receiving, from the second unified data management network element, the identifier information that is of the second session management network element and that corresponds to the session; or
randomly determining the identifier information of the second session management network element based on a preset configuration.

15. The method according to claim 13 or 14, wherein
the fourth request further comprises first identifier information and global identifier information of a target access network device, wherein the first identifier information is identifier information that is allocated by the third network to the terminal device of the second network and that is used to access the third network, the global identifier information of the target access network device comprises second identifier information, and the second identifier information is identifier information that is allocated by the first network to the terminal device of the first network and that is used to access the first network.

16. The method according to claim 15, wherein the sending the third request to the first mobility management network element of the first network comprises:
sending the third request to the first mobility management network element when the first identifier information and the second identifier information indicate that the terminal device is handed over from the third network to the first network.

17. The method according to claim 15 or 16, wherein before the sending the third request to the first mobility management network element of the first network, the method further comprises:
determining the first mobility management network element based on the second identifier information; or
sending a service discovery request to a second topology management network element of the second network, receiving a service discovery response from the second topology management network element, and determining the first mobility management network element based on the service discovery response, wherein the service discovery request comprises the global identifier information of the target access network device, the service discovery request is for requesting to discover a mobility management network element associated with the target access network device, and the service discovery response comprises identifier information of the first mobility management network element.

18. The method according to any one of claims 13 to 17, wherein
the third request comprises third identifier information, and the third identifier information is identifier information that is allocated by the first network to the terminal device of the second network and that is used to access the first network.

19. The method according to any one of claims 13 to 18, wherein
the fourth request further comprises one or more of the following: network slice information, the global identifier information of the target access network device, and identifier information of the third session management network element of the third network.

20. The method according to claim 19, wherein
the third request further comprises one or more of the following: the network slice information, the global identifier information of the target access network device, and the identifier information of the third session management network element of the third network.

21. The method according to any one of claims 13 to 20, wherein the method further comprises:
receiving a third response from the first mobility management network element, wherein the third response indicates that the first network allows the terminal device to be handed over from the third network to the first network, and the third response comprises the identifier information of the first mobility management network element and second tunnel information; and
sending a fourth response to the third mobility management network element, wherein the fourth response indicates that the first network allows the terminal device to be handed over from the third network to the first network, and the fourth response comprises the identifier information of the first mobility management network element and the second tunnel information.

22. The method according to claim 21, wherein
the second tunnel information is used to establish an uplink data forwarding tunnel between a source access network device of the third network and a third user plane network element of the third network.

23. A network handover method, wherein the method is applied to a second session management network element of a second network, and the method comprises:
receiving a second request from a first session management network element of a first network, wherein the second request is for requesting to obtain context information of a terminal device, and the second network is a home network of the terminal device;
sending a fifth request to a third session management network element of a third network, wherein the third session management network element is a network element that establishes a session for the terminal device in the third network, and the fifth request is for requesting to obtain the context information of the terminal device;
receiving a fifth response from the third session management network element, wherein the fifth response comprises the context information that is of the terminal device and that is stored in the third session management network element; and
sending a second response to the first session management network element, wherein the second response comprises the context information that is of the terminal device and that is stored in the third session management network element.

24. The method according to claim 23, wherein
the second request comprises one or more of the following: identifier information of the session established by the third network for the terminal device and identifier information of the third session management network element.

25. The method according to claim 23 or 24, wherein the method further comprises:
obtaining second tunnel information and third tunnel information, wherein the fifth response comprises the second tunnel information and the third tunnel information;
receiving first tunnel information and fourth tunnel information from a second user plane network element of the second network, wherein the first tunnel information is used to establish a data forwarding tunnel between a first user plane network element of the first network and the second user plane network element of the second network, and the third tunnel information and the fourth tunnel information are used establish a data forwarding tunnel between the second user plane network element and a third user plane network element;
sending the first tunnel information and the second tunnel information to the first session management network element;
sending the third tunnel information to the second user plane network element; and
sending the fourth tunnel information to the third session management network element of the third network.

26. The method according to claim 25, wherein
the second tunnel information is used to establish an uplink data forwarding tunnel between a source access network device of the third network and the third user plane network element of the third network.

27. A network handover method, wherein the method is applied to a third mobility management network element of a third network, and the method comprises:
receiving a handover request from a terminal device, wherein the handover request comprises global identifier information of a target access network device, and the handover request is for requesting to hand over to the target access network device;
obtaining identifier information of a second session management network element of a second network based on the handover request, wherein the second network is a home network of the terminal device; and
sending a fourth request to a second mobility management network element of the second network, wherein the fourth request is for requesting to hand over the terminal device from the third network to a first network, and the fourth request comprises the identifier information of the second session management network element.

28. The method according to claim 27, wherein the obtaining the identifier information of the second session management network element of the second network comprises:
determining the identifier information of the second session management network element from a prestored association relationship between identifier information of a session and identifier information of a second session management network element based on identifier information of a session established by the third network for the terminal device; or
sending, to a third session management network element of the third network, identifier information of a session established by the third network for the terminal device, and receiving the identifier information of the second session management network element from the third session management network element; or
sending, to a unified data management network element, identifier information of a session established by the third network for the terminal device, and receiving the identifier information of the second session management network element from the unified data management network element, wherein the unified data management network element is a third unified data management network element of the third network, or the unified data management network element is a second unified data management network element of the second network.

29. The method according to claim 27 or 28, wherein
the fourth request further comprises first identifier information and the global identifier information of the target access network device, wherein the first identifier information is identifier information that is allocated by the third network to the terminal device of the second network and that is used to access the third network, the global identifier information of the target access network device comprises second identifier information, and the second identifier information is identifier information that is allocated by the first network to a terminal device of the first network and that is used to access the first network.

30. The method according to any one of claims 27 to 29, wherein the method further comprises:
receiving a fourth response from the second mobility management network element, wherein the fourth response indicates that the first network allows the terminal device to be handed over from the third network to the first network, the fourth response comprises identifier information of a first mobility management network element of the first network and second tunnel information, and the second tunnel information is used to establish an uplink data forwarding tunnel between a source access network device of the third network and a third user plane network element of the third network; and
sending the second tunnel information to the source access network device of the terminal device.

31. A network handover method, wherein the method is applied to a second user plane network element of a second network, and the method comprises:
receiving service data of a terminal device from a third user plane network element of a third network, wherein the second network is a home network of the terminal device;
determining a first user plane network element of a first network based on the service data of the terminal device; and
sending the service data of the terminal device to the first user plane network element of the first network.

32. The method according to claim 31, wherein the receiving the service data of the terminal device from the third user plane network element of the third network comprises:
sending fourth tunnel information to a second session management network element of the second network, wherein the fourth tunnel information is used to establish an uplink data forwarding tunnel between the second user plane network element and the third user plane network element; and
receiving the service data that is of the terminal device and that is sent by the third user plane network element based on the fourth tunnel information.

33. The method according to claim 31 or 32, wherein the sending the service data of the terminal device to the first user plane network element of the first network comprises:
receiving fifth tunnel information from the second session management network element of the second network, wherein the fifth tunnel information is used to establish an uplink data forwarding tunnel between the first user plane network element and the second user plane network element; and
sending the service data of the terminal device to the first user plane network element based on the fifth tunnel information.

34. A communication apparatus, wherein the communication apparatus comprises a processor, wherein the processor is configured to run a computer program or instructions, to cause the communication apparatus to perform the network handover method according to any one of claims 1 to 5, the network handover method according to any one of claims 6 to 12, the network handover method according to any one of claims 13 to 22, the network handover method according to any one of claims 23 to 26, the network handover method according to any one of claims 27 to 30, or the network handover method according to any one of claims 31 to 33.

35. A computer-readable storage medium, wherein the computer-readable storage medium stores computer instructions or a program, and when the computer instructions or the program is run on a computer, the network handover method according to any one of claims 1 to 5 is performed, the network handover method according to any one of claims 6 to 12 is performed, the network handover method according to any one of claims 13 to 22 is performed, the network handover method according to any one of claims 23 to 26 is performed, the network handover method according to any one of claims 27 to 30 is performed, or the network handover method according to any one of claims 31 to 33 is performed.

36. A computer program product, wherein the computer program product comprises computer instructions, wherein when a part or all of the computer instructions are run on a computer, the network handover method according to any one of claims 1 to 5 is performed, the network handover method according to any one of claims 6 to 12 is performed, the network handover method according to any one of claims 13 to 22 is performed, the network handover method according to any one of claims 23 to 26 is performed, the network handover method according to any one of claims 27 to 30 is performed, or the network handover method according to any one of claims 31 to 33 is performed.
